# EUROPEAN PATENT APPLICATION

(11) **EP 4 624 087 A1**
(43) Date of publication of application: **01.10.2025**
(21) Application number: 23941602.7
(22) Date of filing: 15.06.2023
(51) Int. Cl.: B23K 26/38, B23K 26/70

(54) **LASER PROCESSING METHOD, LASER PROCESSING DEVICE, AND PROGRAM**

(71) Applicant: Yamazaki Mazak Corporation, Niwa-gun, Aichi 480-0197 (JP)
(72) Inventor: KAGEYAMA, Keisuke, Niwa-gun, Aichi 480-0197 (JP); SHIMAMOTO, Kazuya, Niwa-gun, Aichi 480-0197 (JP); ICHINO, Kentaro, Niwa-gun, Aichi 480-0197 (JP); NAKANISHI, Tetsuya, Niwa-gun, Aichi 480-0197 (JP)
(74) Representative: TBK
(86) International application number: PCT/JP2023/022217
(87) International publication number: WO 2024/257298

(57) **Abstract**

A laser beam machining method includes steps of: placing a plate material on a support; machining the plate material by irradiating the plate material placed on the support with a laser beam; detaching a machined plate material from the support; and removing dross from the support by bringing a tool in a rotating state into contact with the dross that adheres to the support resulting from irradiating the plate material with the laser beam.

## Description

### Technical Field

The present invention relates to a laser beam machining method, a laser beam machining apparatus, and a program.

### Background Art

A laser beam machine that machines a plate material using a laser beam is known.

As a related art, Patent Literature 1 discloses a laser beam machine. The laser beam machine described in Patent Literature 1 includes a head that is moved relative to a workpiece. The head includes a clamping device to which a laser beam machining tool and a machine working tool are attached to be changeable.

### Citation List

### Patent Literature

PTL1: JP 4588422 B2.

### Summary of Invention

### Technical Problem

An object of the present invention is to provide a laser beam machining method, a laser beam machining apparatus, and a program that are capable of removing dross that adheres to a support from the support.

### Solution to Problem

A laser beam machining method according to some embodiments includes steps of: placing a plate material on a support; machining the plate material by irradiating the plate material placed on the support with a laser beam; detaching the plate material that has been machined from the support; and removing dross from the support by bringing a tool in a rotating state into contact with the dross that adheres to the support resulting from irradiating the plate material with the laser beam.

A laser beam machining apparatus according to some embodiments includes: a laser beam irradiation apparatus including a first head configured to irradiate a plate material supported by a support with a laser beam; a second head configured to support a tool to be rotatable; a rotation drive configured to rotate the tool; a mover configured to move the second head relative to the support; and a controller configured to control the laser beam irradiation apparatus, the rotation drive, and the mover. The controller is capable of selectively performing a first machining mode of irradiating the plate material with the laser beam from the first head, and a dross removing mode of removing dross from the support by bringing the tool in a rotating state into contact with the dross that adheres to the support resulting from irradiating the plate material with the laser beam.

A program according to some embodiments is a program for causing a laser beam machining apparatus to perform a laser beam machining method including steps of: machining a plate material by irradiating the plate material placed on a support with a laser beam; and removing dross from the support by bringing a tool in a rotating state into contact with the dross that adheres to the support resulting from irradiating the plate material with the laser beam.

### Effects of Invention

According to the present invention, it becomes possible to provide a laser beam machining method, a laser beam machining apparatus, and a program that are capable of removing dross that adheres to a support from the support.

### Brief Description of Drawings

[FIG. 1] FIG. 1 is a schematic perspective view of a support, schematically illustrating the support.
[FIG. 2] FIG. 2 is an enlarged schematic perspective view of a part of the support.
[FIG. 3] FIG. 3 is a schematic plan view of a state in which a plate material is placed on the support, schematically illustrating the state.
[FIG. 4] FIG. 4 is a schematic perspective view of a state after the plate material is placed on the support, schematically illustrating the state.
[FIG. 5] FIG. 5 is an enlarged view of a region indicated by a dash-dotted circle A1 in FIG. 4.
[FIG. 6] FIG. 6 is a schematic perspective view of a state in which laser machining is being performed, schematically illustrating the state.
[FIG. 7] FIG. 7 is an enlarged view of a region indicated by a dash-dotted circle A2 in FIG. 6.
[FIG. 8] FIG. 8 is a schematic perspective view of a state after the plate material placed on the support is machined, schematically illustrating the state.
[FIG. 9] FIG. 9 is a schematic plan view of a state after a machined plate material is detached from the support, schematically illustrating the state.
[FIG. 10] FIG. 10 is a schematic perspective view of a laser beam machining apparatus according to a first modification of the first embodiment, schematically illustrating the laser beam machining apparatus.
[FIG. 11] FIG. 11 is an enlarged schematic perspective view of a state in which a plurality of pieces of dross adhere to the support.
[FIG. 12] FIG. 12 is a schematic perspective view of a state after the support is transferred to a machining region from a detachment region.
[FIG. 13] FIG. 13 is a schematic perspective view of a state in which a dross removing process is being performed, schematically illustrating the state.
[FIG. 14] FIG. 14 is an enlarged view of a region indicated by a dash-dotted circle A3 in FIG. 13.
[FIG. 15] FIG. 15 is a flowchart illustrating a laser beam machining method according to the first embodiment.
[FIG. 16] FIG. 16 is an enlarged schematic perspective view of a part of the support.
[FIG. 17] FIG. 17 is a schematic perspective view of the support, schematically illustrating the support.
[FIG. 18] FIG. 18 is a schematic side view of a state in which the dross is removed from the support using a tool in a rotating state, schematically illustrating the state.
[FIG. 19] FIG. 19 is a schematic perspective view of a state in which the dross is removed from the support using the tool in the rotating state, schematically illustrating the state.
[FIG. 20] FIG. 20 is a schematic perspective view of a state in which the dross is removed from the support using the tool in the rotating state, schematically illustrating the state.
[FIG. 21] FIG. 21 is a schematic perspective view of a state in which the dross is removed from the support using the tool in the rotating state, schematically illustrating the state.
[FIG. 22] FIG. 22 is a schematic perspective view of a state in which the dross is removed from the support using the tool in the rotating state, schematically illustrating the state.
[FIG. 23] FIG. 23 is a schematic side view of a state in which the dross is removed from the support using the tool in the rotating state according to a modification, schematically illustrating the state.
[FIG. 24] FIG. 24 is an enlarged schematic perspective view of a part of a support according to the modification.
[FIG. 25] FIG. 25 is a schematic perspective view of a state in which the plate material is being machined using a second tool attached to a second head, schematically illustrating the state.
[FIG. 26] FIG. 26 is a schematic side view of the laser beam machining apparatus according to the first embodiment, schematically illustrating the laser beam machining apparatus.
[FIG. 27] FIG. 27 is a schematic front view of the laser beam machining apparatus according to the first embodiment, schematically illustrating the laser beam machining apparatus.
[FIG. 28] FIG. 28 is a schematic plan view of the laser beam machining apparatus according to the first embodiment, schematically illustrating the laser beam machining apparatus.
[FIG. 29] FIG. 29 is a schematic side view of a state in which the dross removing process is being performed, schematically illustrating the state.
[FIG. 30] FIG. 30 is a schematic side view of a laser beam machining apparatus according to a second modification of the first embodiment, schematically illustrating the laser beam machining apparatus.
[FIG. 31] FIG. 31 is a schematic perspective view of a laser beam machining apparatus according to a third modification of the first embodiment, schematically illustrating the laser beam machining apparatus.
[FIG. 32] FIG. 32 is a schematic perspective view of a laser beam irradiation apparatus, schematically illustrating the laser beam irradiation apparatus.
[FIG. 33] FIG. 33 is a schematic side view of a laser beam machining apparatus according to a fourth modification of the first embodiment, schematically illustrating the laser beam machining apparatus.
[FIG. 34] FIG. 34 is a schematic side view of a laser beam machining apparatus according to the fourth modification of the first embodiment, schematically illustrating the laser beam machining apparatus.
[FIG. 35] FIG. 35 is a schematic illustration of a state in which to-be-controlled equipment is controllable by a controller.
[FIG. 36] FIG. 36 is a schematic plan view of an example of a movement path of the tool, schematically illustrating the example.
[FIG. 37] FIG. 37 is a schematic side view of a state in which the plate material is being machined using the second tool attached to the second head, schematically illustrating the state.
[FIG. 38] FIG. 38 is a schematic illustration of an example of a storage medium in which a program is recorded.
[FIG. 39] FIG. 39 is a schematic perspective view of a state in which the dross is removed using a tool in which a plurality of wire rods are attached to a shaft portion, schematically illustrating the state.
[FIG. 40] FIG. 40 is a schematic side view of a state in which the dross is removed using a tool in which a plurality of wire rods are attached to the shaft portion, schematically illustrating the state.

### Description of Embodiments

Hereinafter, a laser beam machining method, a laser beam machining apparatus 1, and a program 722 according to embodiments will be described with reference to the drawings. It is to be noted that in the following description of the embodiments, portions and members having the identical functions are denoted by the identical reference numerals, and repeated description of the portions and members denoted by the identical reference numerals will be omitted.

### (First Embodiment)

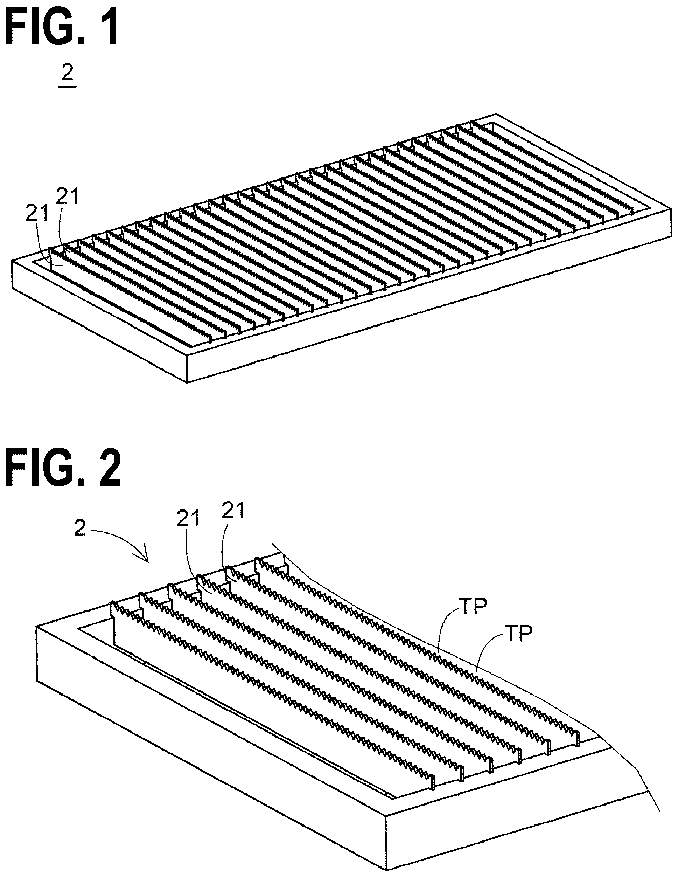

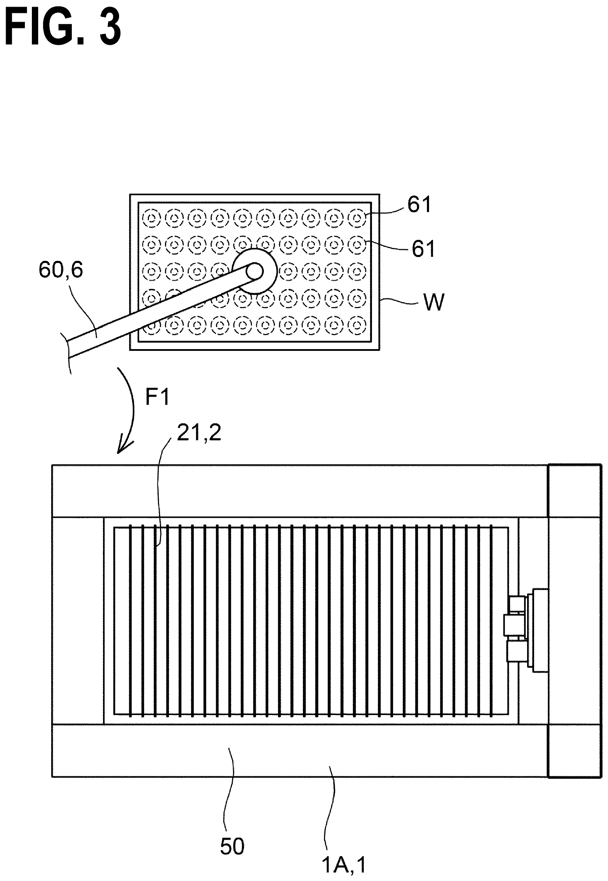

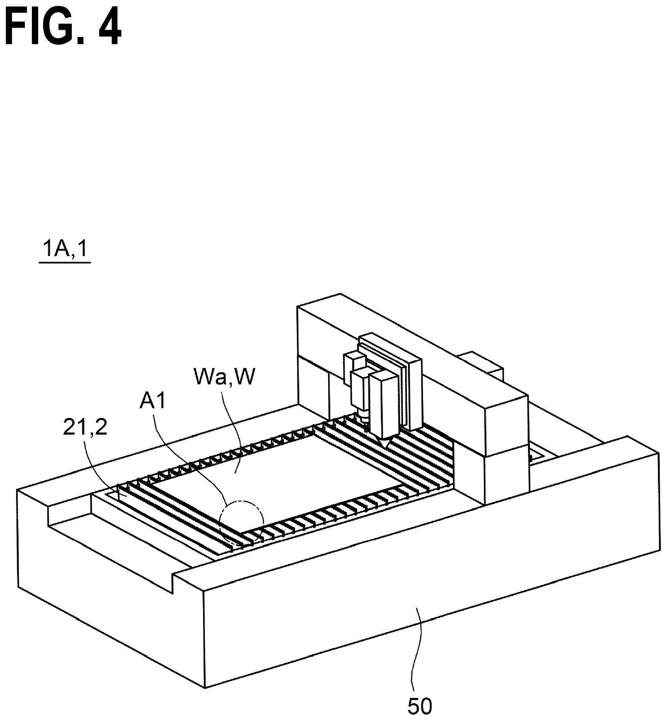

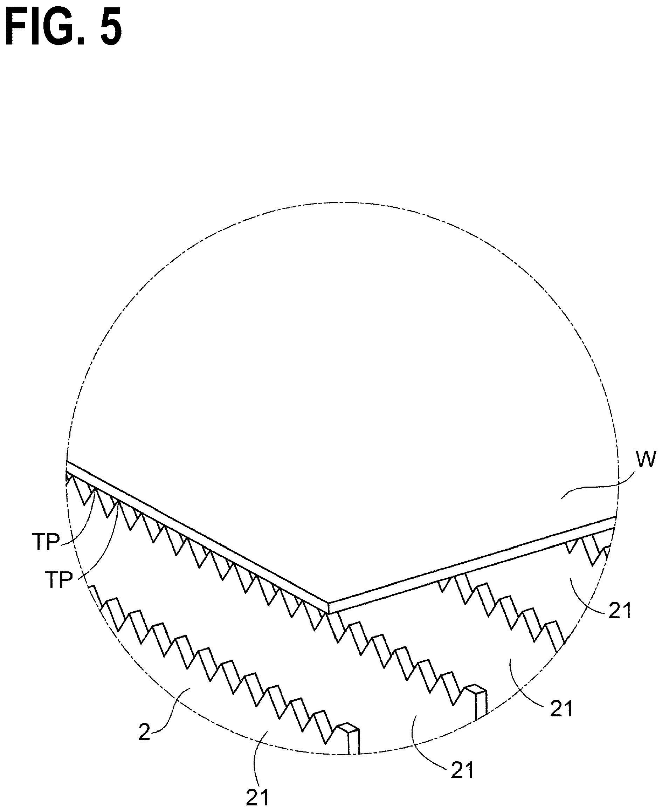

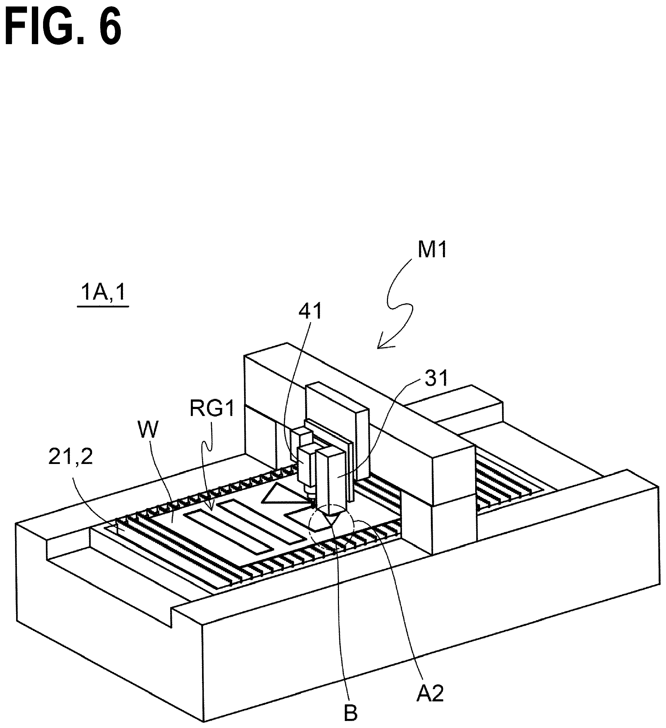

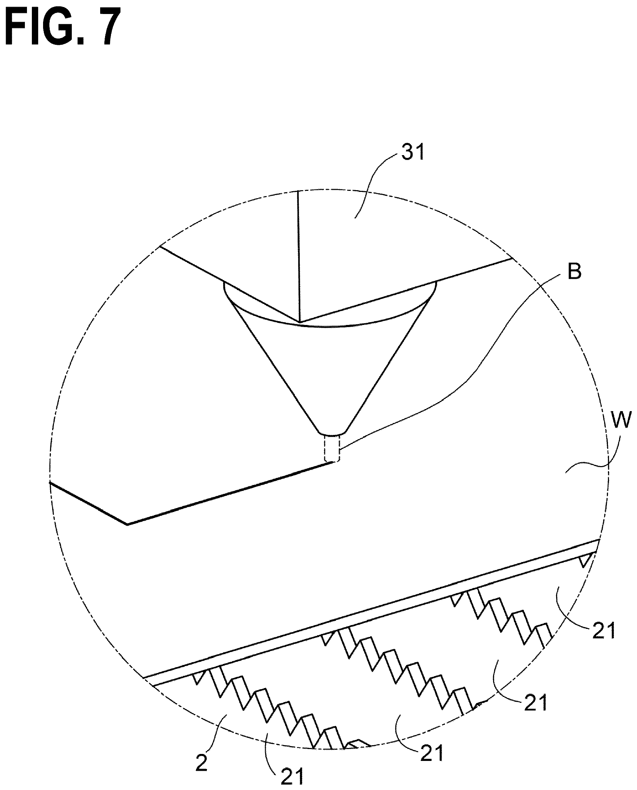

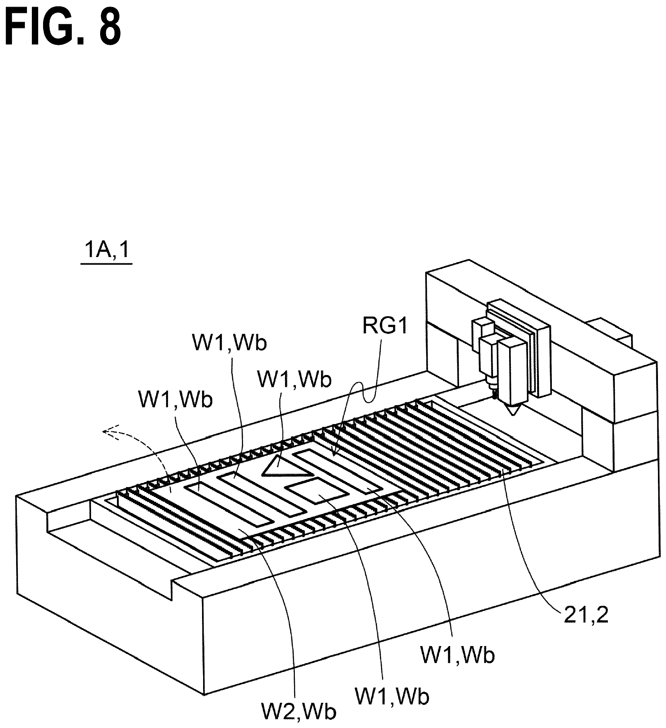

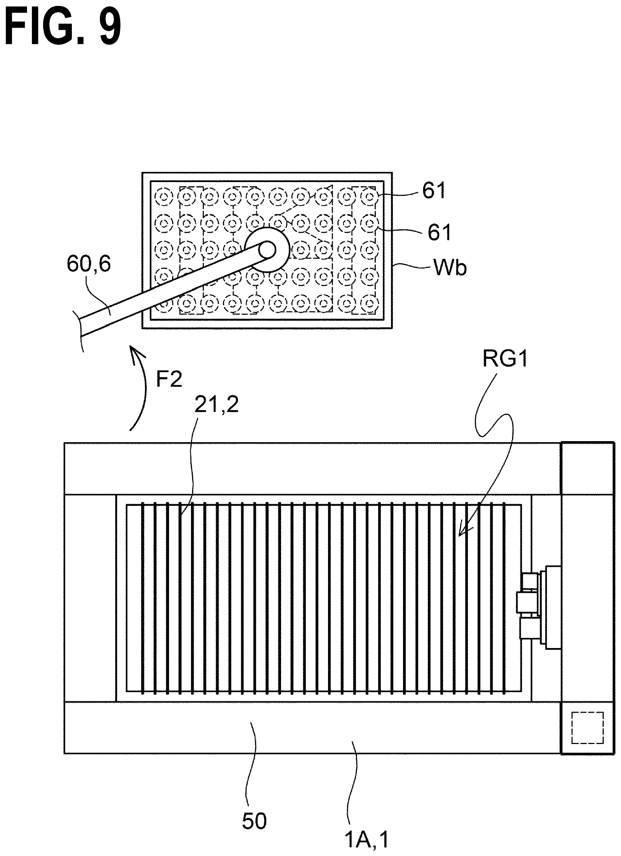

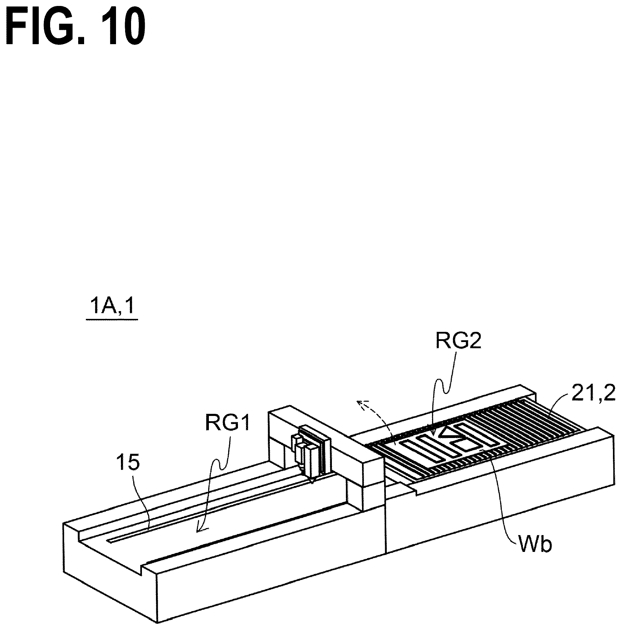

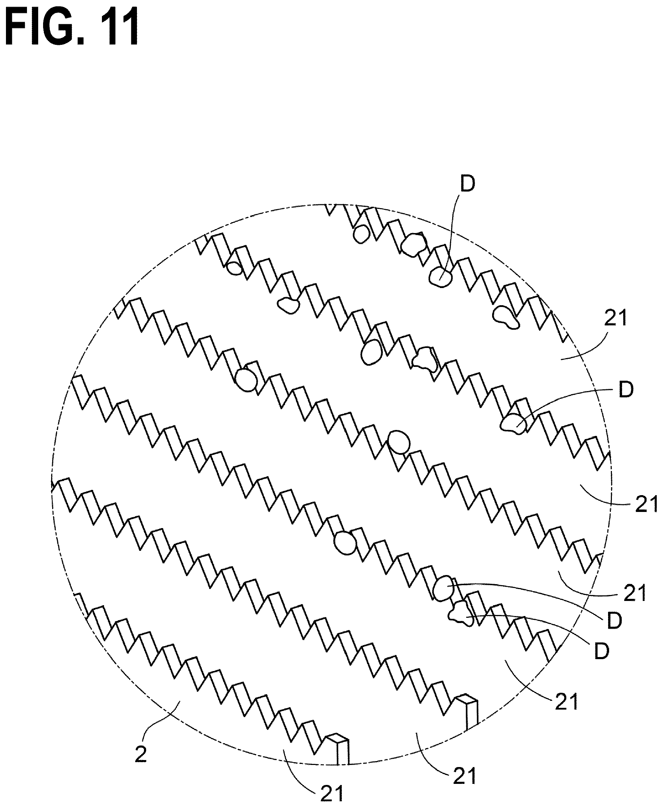

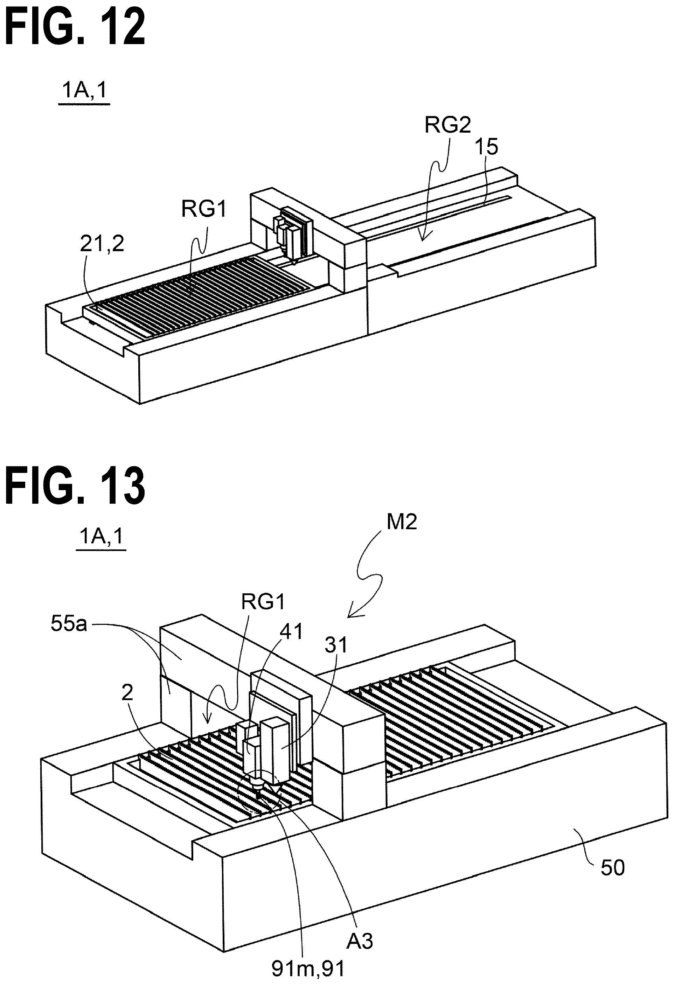

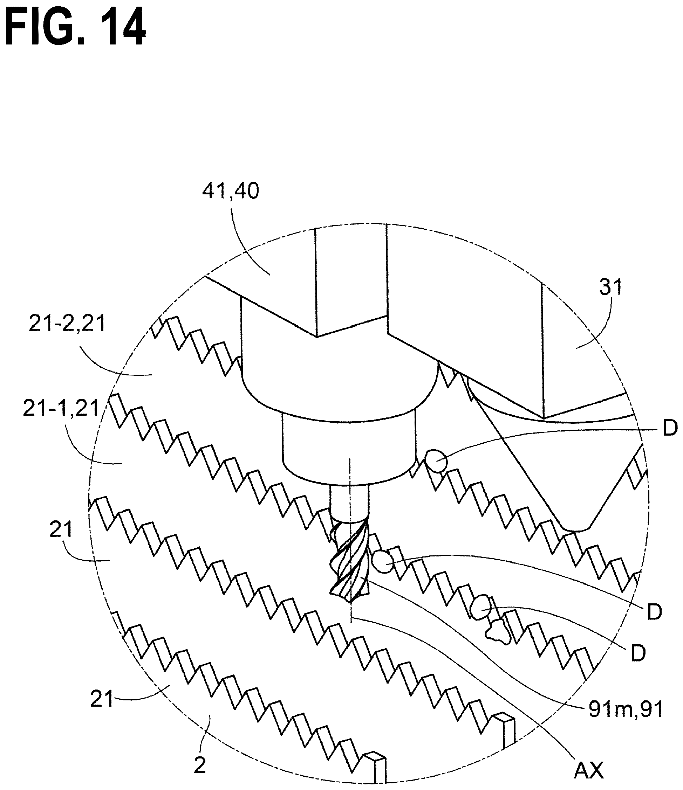

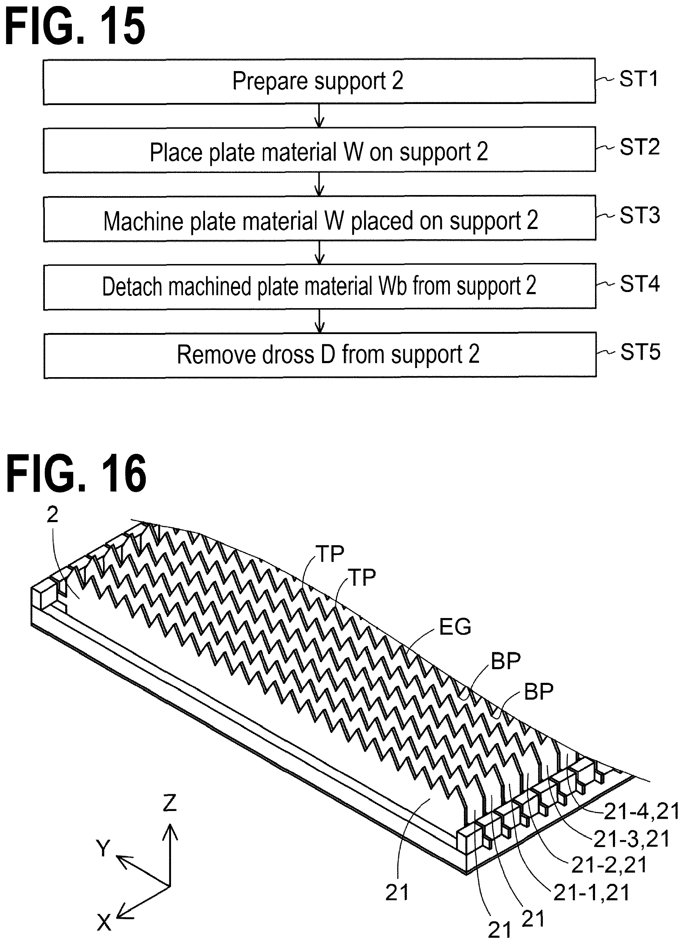

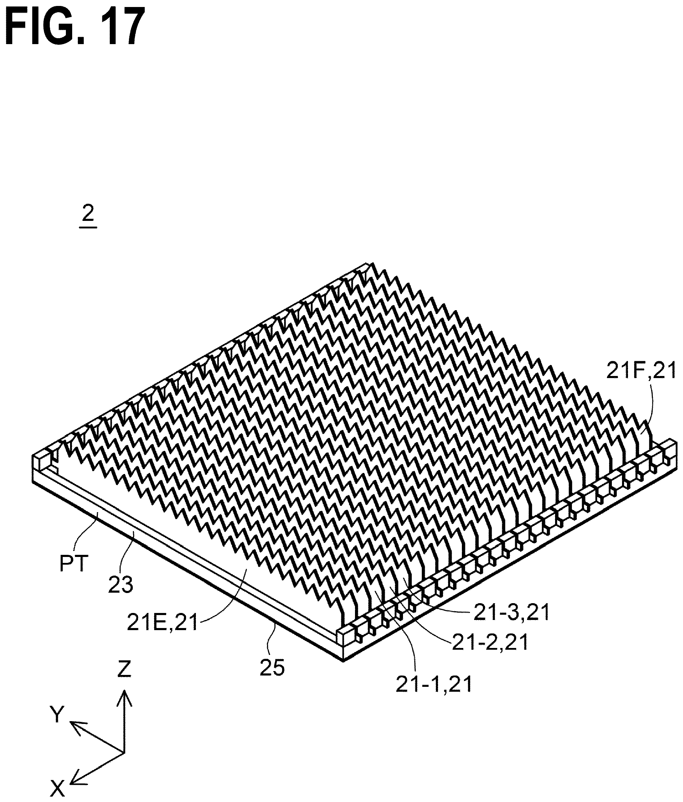

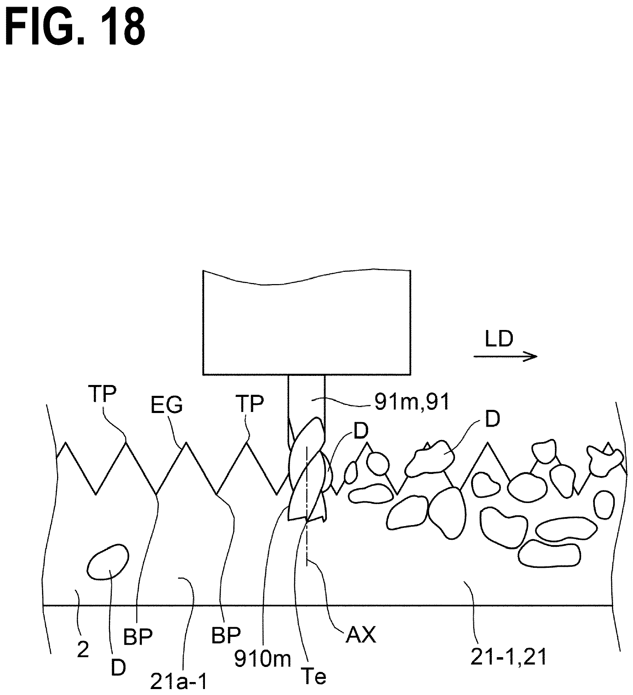

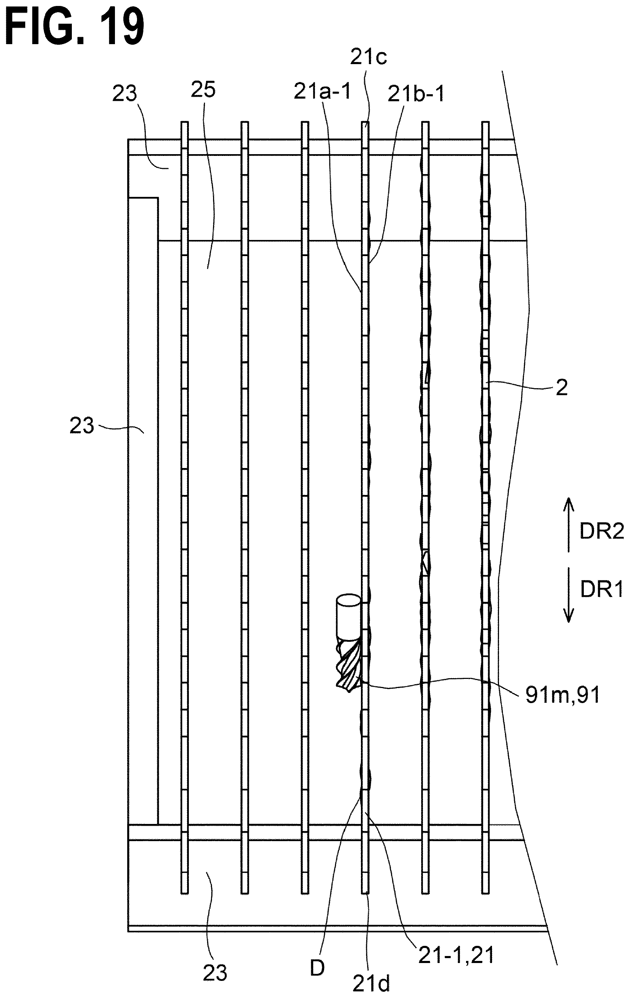

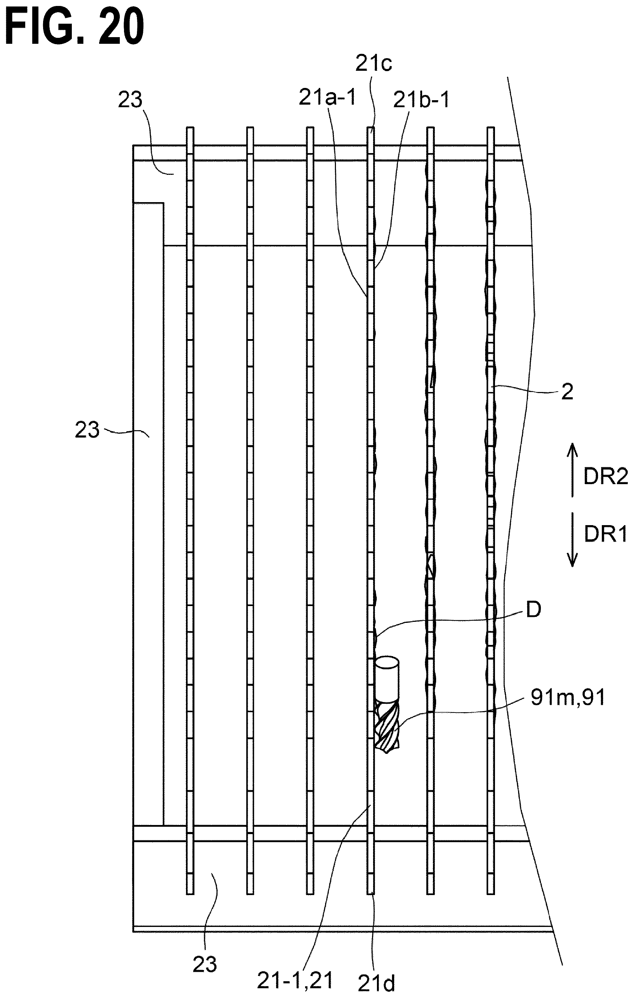

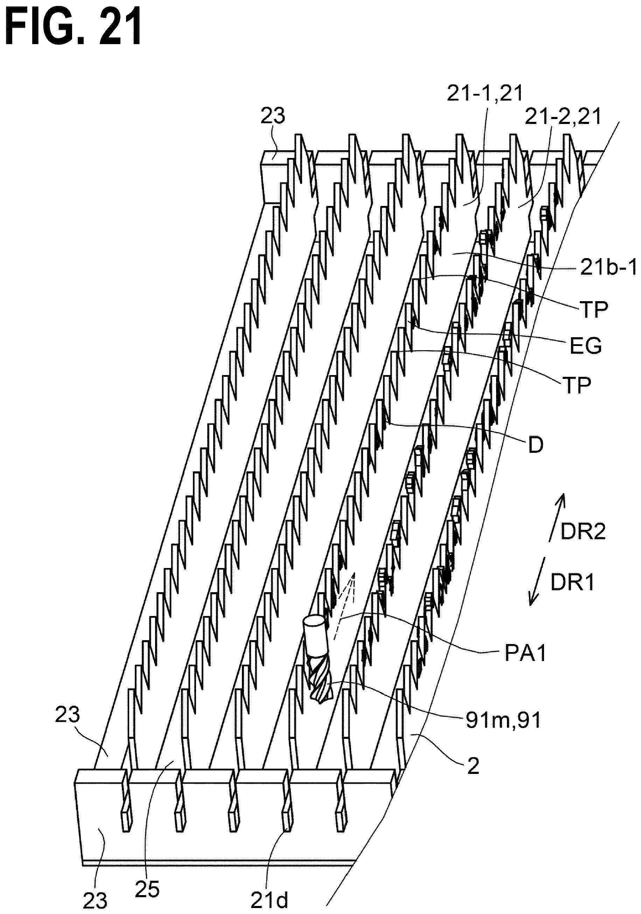

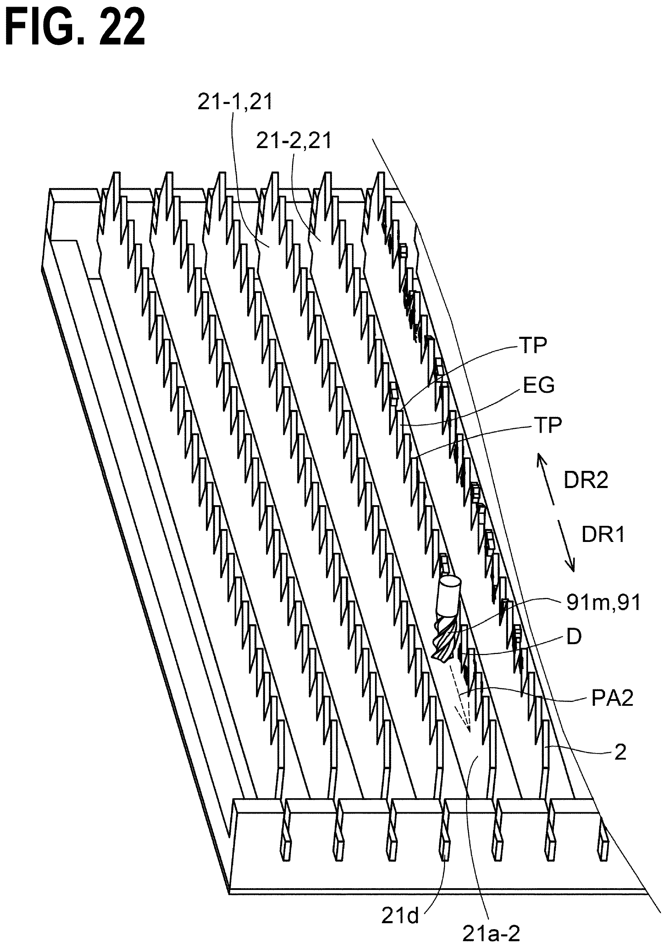

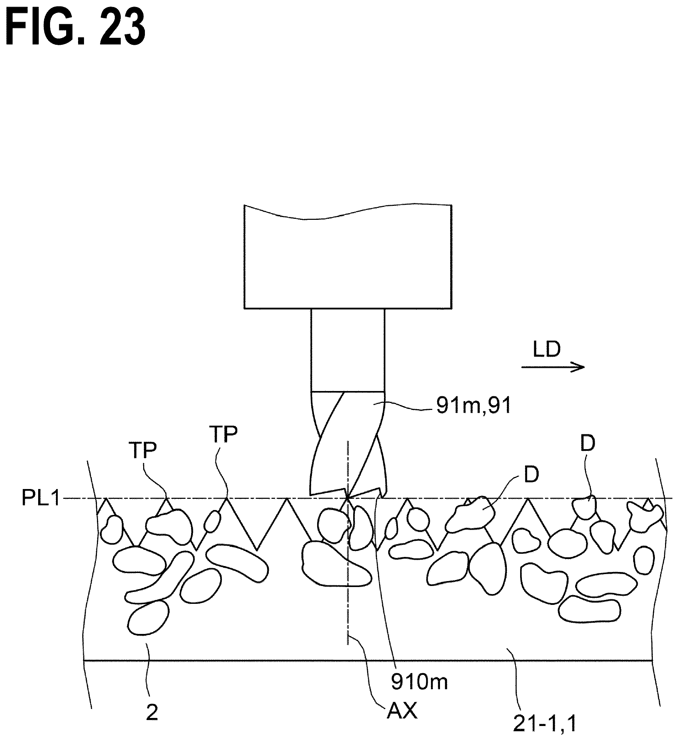

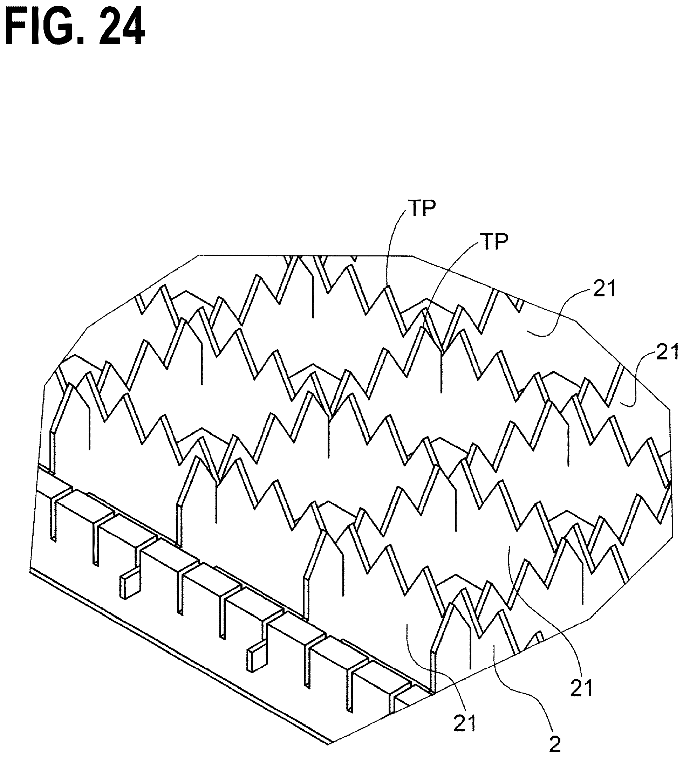

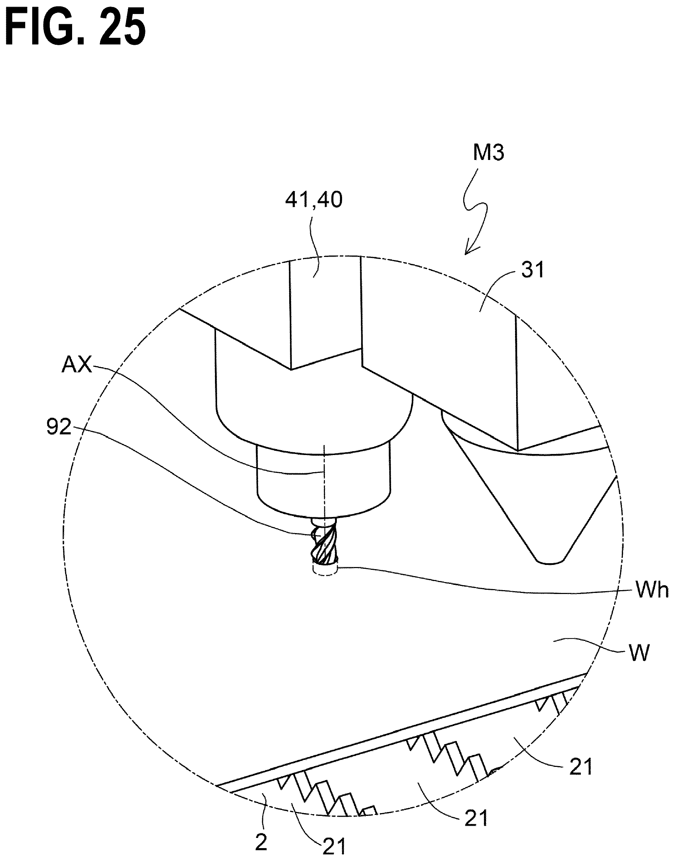

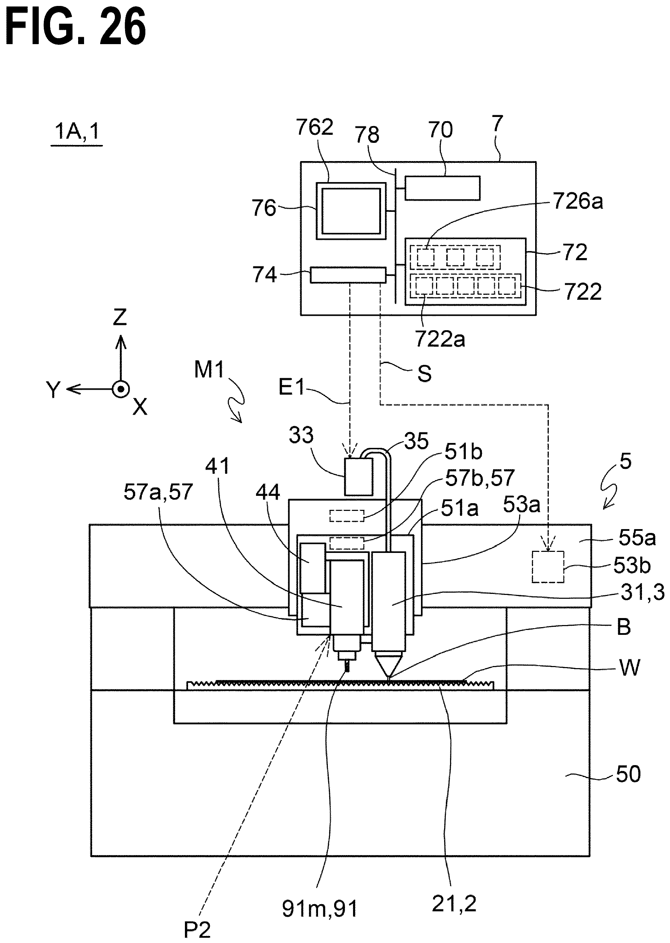

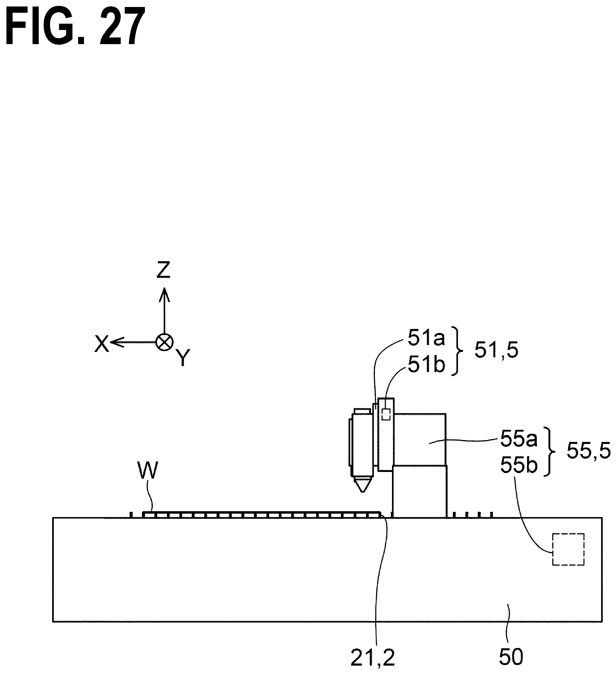

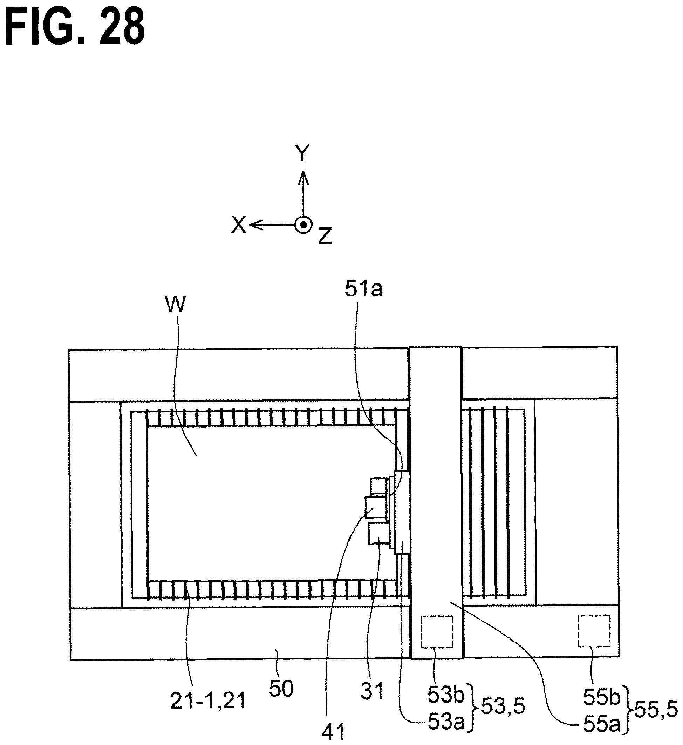

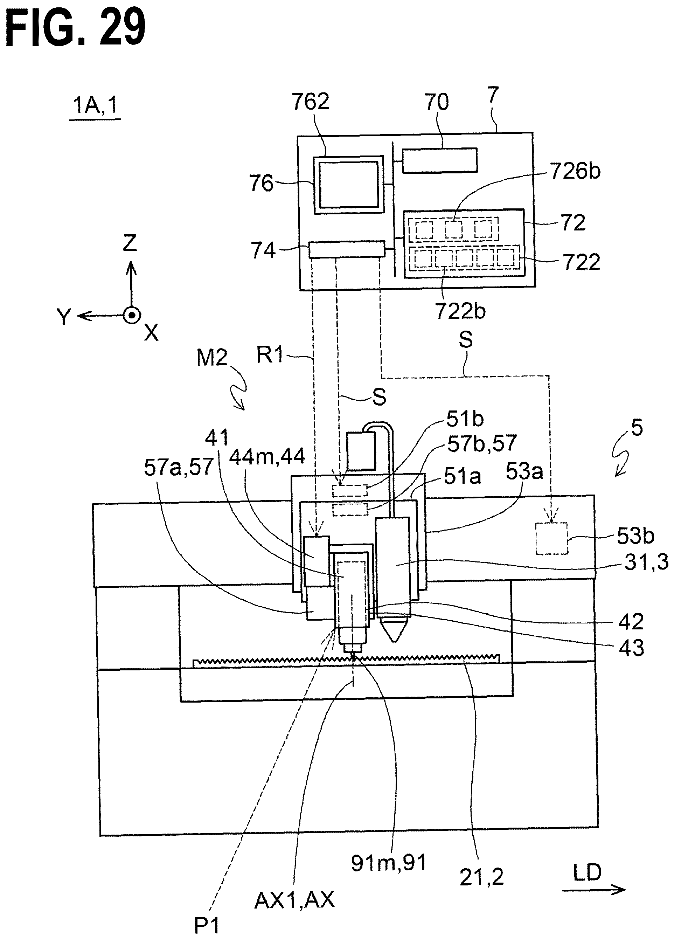

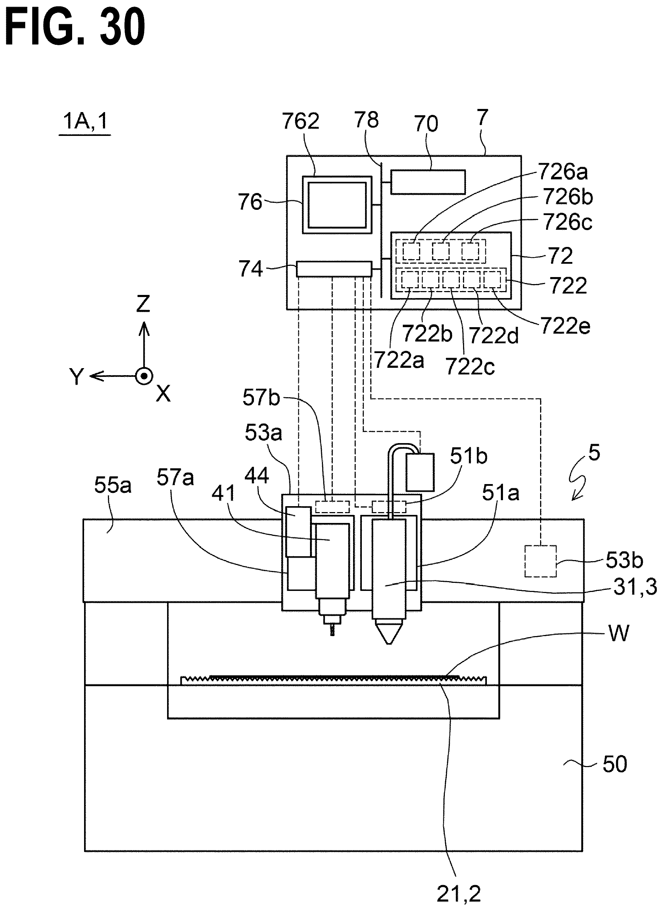

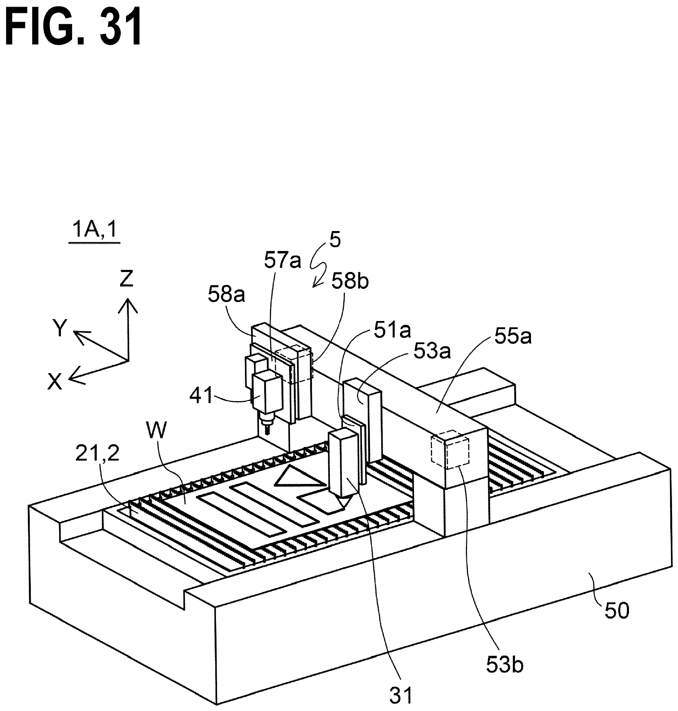

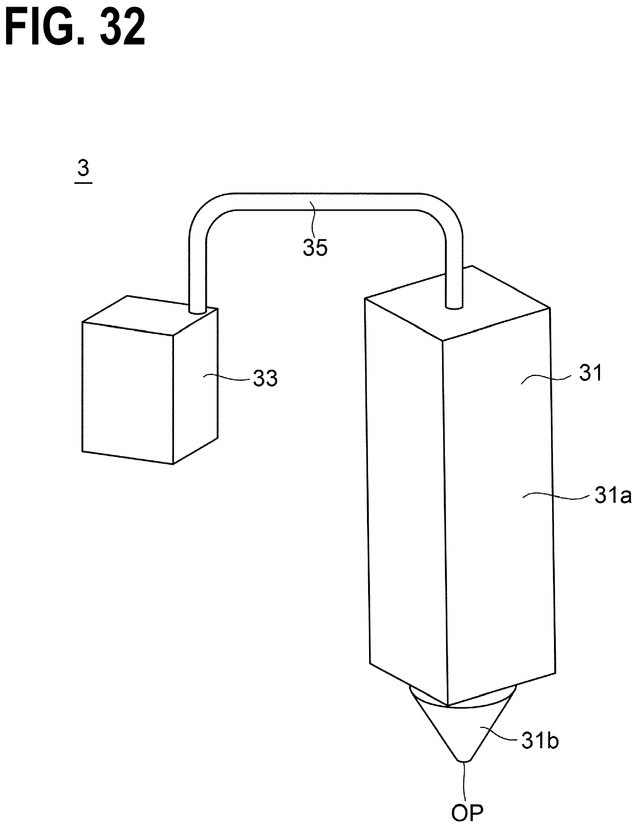

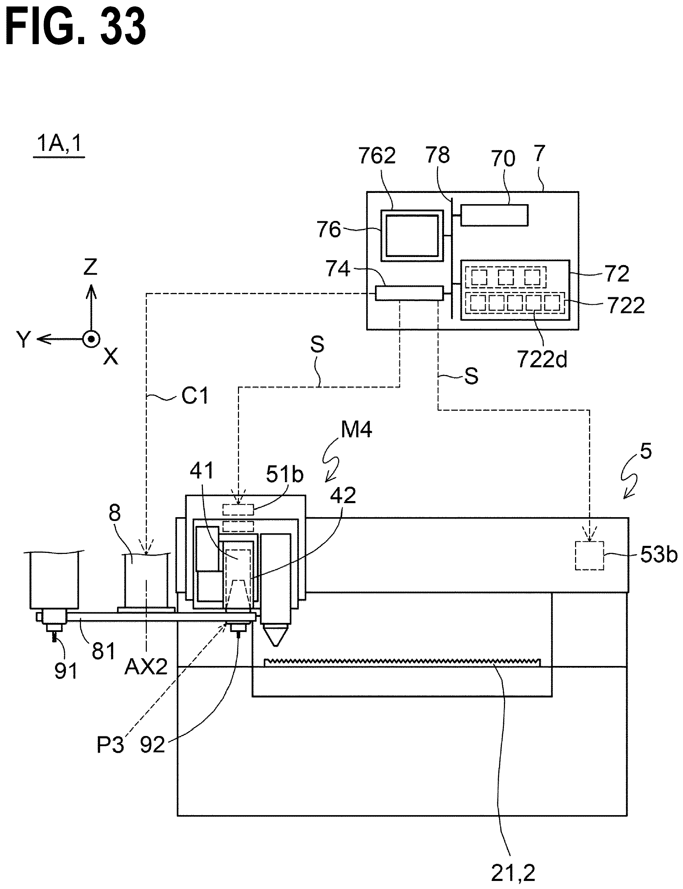

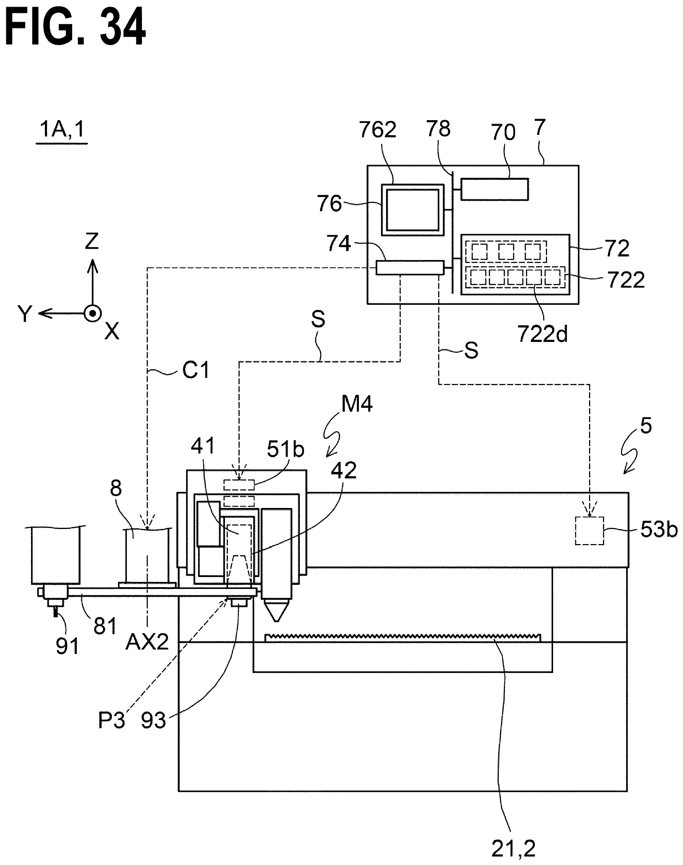

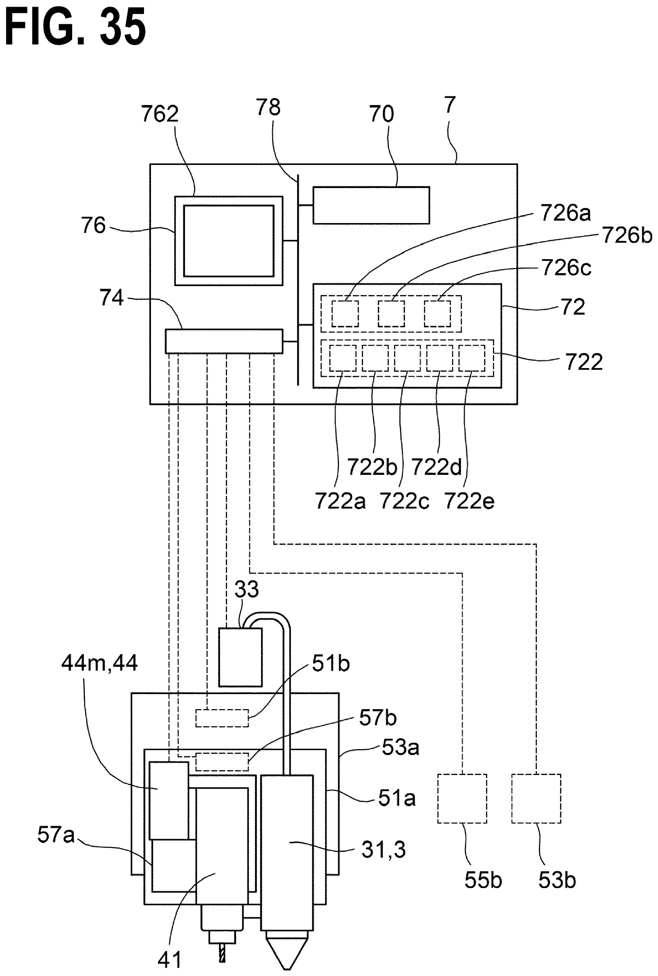

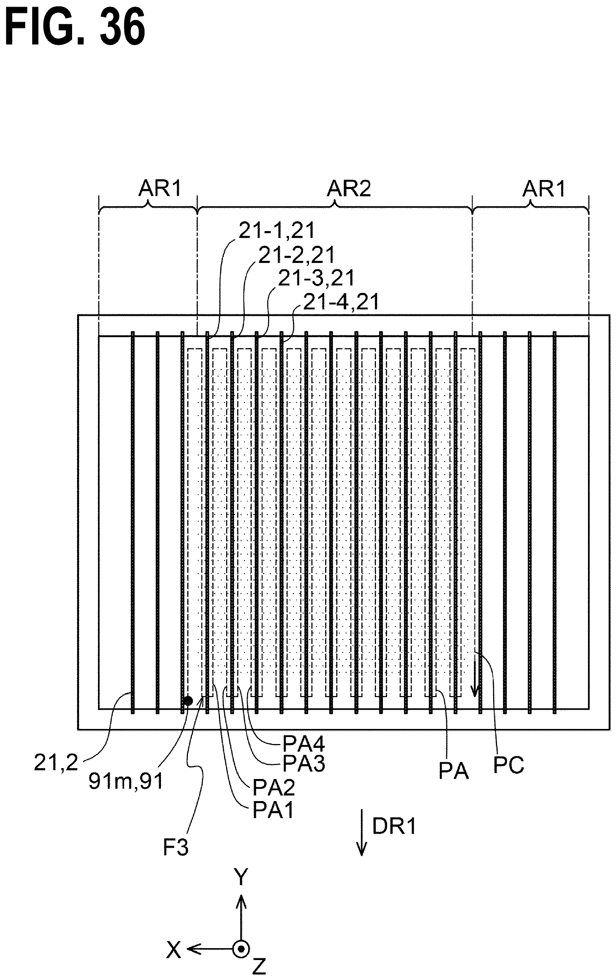

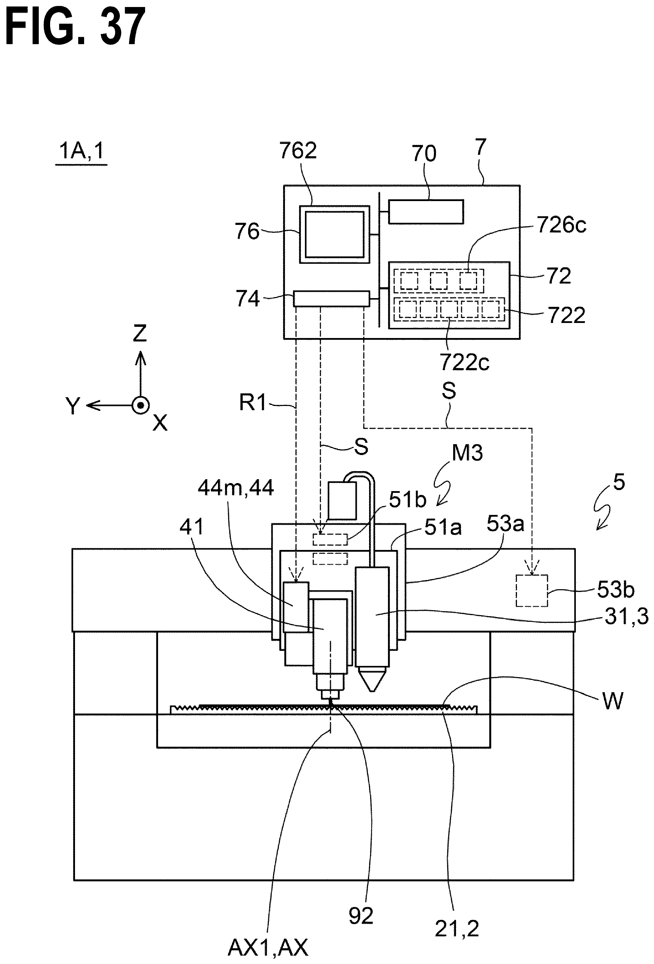

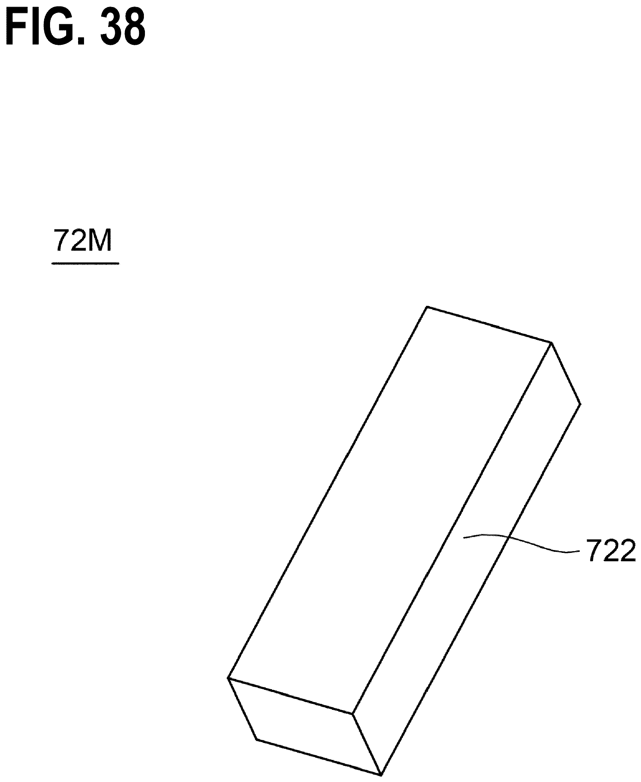

A laser machining method, the laser beam machining apparatus 1, and the program 722 according to the first embodiment will be described with reference to FIGs. 1 to 38. FIG. 1 is a schematic perspective view of a support 2, schematically illustrating the support 2. FIG. 2 is an enlarged schematic perspective view of a part of the support 2. FIG. 3 is a schematic plan view of a state in which a plate material W is placed on the support 2, schematically illustrating the state. FIG. 4 is a schematic perspective view of a state after the plate material W is placed on the support 2, schematically illustrating the state. FIG. 5 is an enlarged view of a region indicated by a dash-dotted circle A1 in FIG. 4. FIG. 6 is a schematic perspective view of a state in which laser machining is being performed, schematically illustrating the state. FIG. 7 is an enlarged view of a region indicated by a dash-dotted circle A2 in FIG. 6. FIG. 8 is a schematic perspective view of a state after the plate material placed on the support 2 is machined, schematically illustrating the state. FIG. 9 is a schematic plan view of a state after a machined plate material Wb is detached from the support 2, schematically illustrating the state. FIG. 10 is a schematic perspective view of a laser beam machining apparatus 1 according to a first modification of the first embodiment, schematically illustrating the laser beam machining apparatus 1. FIG. 11 is an enlarged schematic perspective view of a state in which a plurality of pieces of dross D adhere to the support 2. FIG. 12 is a schematic perspective view of a state after the support 2 is transferred to a machining region RG1 from a detachment region RG2. FIG. 13 is a schematic perspective view of a state in which a dross removing process is being performed, schematically illustrating the state. FIG. 14 is an enlarged view of a region indicated by a dash-dotted circle A3 in FIG. 13. FIG. 15 is a flowchart illustrating a laser beam machining method according to the first embodiment. FIG. 16 is an enlarged schematic perspective view of a part of the support 2. FIG. 17 is a schematic perspective view of the support 2, schematically illustrating the support 2. FIG. 18 is a schematic side view of a state in which the dross D is removed from the support 2 using a tool 91 in a rotating state, schematically illustrating the state. FIGs. 19 and 20 are each a schematic perspective view of a state in which the dross D is removed from the support 2 using the tool 91 in the rotating state, schematically illustrating the state. It is to be noted that in FIGs. 19 and 20, the support 2 is viewed obliquely from above. FIGs. 21 and 22 are each a schematic perspective view of a state in which the dross D is removed from the support 2 using the tool 91 in the rotating state, schematically illustrating the state. FIG. 23 is a schematic side view of a state in which the dross D is removed from the support 2 using the tool 91 in the rotating state according to a modification, schematically illustrating the state. FIG. 24 is an enlarged schematic perspective view of a part of the support 2 according to the modification. FIG. 25 is a schematic perspective view of a state in which the plate material W is being machined using a second tool 92, which is attached to a second head 41, schematically illustrating the state. FIG. 26 is a schematic side view of the laser beam machining apparatus 1 according to the first embodiment, schematically illustrating the laser beam machining apparatus 1. FIG. 27 is a schematic front view of the laser beam machining apparatus 1 according to the first embodiment, schematically illustrating the laser beam machining apparatus 1. FIG. 28 is a schematic plan view of the laser beam machining apparatus 1 according to the first embodiment, schematically illustrating the laser beam machining apparatus 1. FIG. 29 is a schematic side view of a state in which the dross removing process is being performed, schematically illustrating the state. FIG. 30 is a schematic side view of the laser beam machining apparatus 1 according to a second modification of the first embodiment, schematically illustrating the laser beam machining apparatus 1. FIG. 31 is a schematic perspective view of the laser beam machining apparatus 1 according to a third modification of the first embodiment, schematically illustrating the laser beam machining apparatus 1. FIG. 32 is a schematic perspective view of a laser beam irradiation apparatus 3, schematically illustrating the laser beam irradiation apparatus 3. FIGs. 33 and 34 are each a schematic side view of the laser beam machining apparatus 1 according to a fourth modification of the first embodiment, schematically illustrating the laser beam machining apparatus 1. FIG. 35 is a schematic illustration of a state in which to-be-controlled equipment is controllable by a controller 7. FIG. 36 is a schematic plan view of an example of a movement path of the tool 91, schematically illustrating the example. FIG. 37 is a schematic side view of a state in which the plate material W is being machined using the second tool 92, which is attached to the second head 41, schematically illustrating the state. FIG. 38 is a schematic illustration of an example of a storage medium 72M in which a program 722 is recorded.

As illustrated in FIG. 1, in a first step ST1, the support 2 is prepared. The first step ST1 is a preparing process. When the laser beam machining is performed on a plate material, the support 2 supports such a plate material. As illustrated in FIG. 2, the support 2 may include a plurality of top portions TP, which support the plate material. In a case where the support 2 includes a pin support that supports the plate material, such a pin support includes the plurality of top portions TP, which support the plate material.

As illustrated in FIGs. 3 and 4, in a second step ST2, the plate material W is placed on the support 2. The second step ST2 is a placing process. The placing process (second step ST2) may be performed using a plate material transfer apparatus 6 (for example, a robot hand 60). The robot hand 60 includes, for example, a plurality of suckers 61 for sucking the plate material W or a fork for supporting the plate material W from below. Alternatively, the placing process (second step ST2) may be performed manually.

As illustrated in FIG. 5, after the placing process (second step ST2) is performed, the plate material W is supported by the plurality of top portions TP of the support 2. The plurality of top portions TP are preferably located on a first plane parallel to a horizontal plane. In other words, the plurality of top portions TP are preferably located on a virtual plane parallel to the horizontal plane. In this case, the plate material W, which is supported by the plurality of top portions TP, is disposed in parallel to the horizontal plane. It is to be noted that as the laser beam machining is performed on the plate material W, which is placed on the support 2, at least some of the plurality of top portions TP may be degraded. For this reason, in the first embodiment, such degraded top portions TP of the support 2 may not necessarily be located on the first plane.

As illustrated in FIG. 6, in a third step ST3, the plate material W, which is placed on the support 2, is subjected to machining. The third step ST3 is a plate material machining process. In an example illustrated in FIG. 7, the plate material machining process includes irradiating the plate material W, which is placed on the support 2, with laser B (that is, a laser beam) to machine the plate material W. More specifically, the plate material machining process includes irradiating the plate material W, which is placed on the support 2, with the laser beam B to cut the plate material W. Additionally, the plate material machining process may include machining the plate material W using a second tool (for example, a drilling tool) to be described later.

Herein, articles formed of the plate material W by performing the plate material machining process (third step ST3) will be collectively referred to as a machined plate material Wb. By performing the plate material machining process (third step ST3), a plate material Wa before machining results in the machined plate material Wb.

In an example illustrated in FIG. 8, the machined plate material Wb includes a part/parts W1 and offcuts W2. By performing the plate material machining step, one part W1 may be formed from the plate material W, or a plurality of parts W1 may be formed from the plate material W.

As indicated by a broken line arrow in FIG. 8, in a fourth step ST4, the machined plate material Wb is detached from the support 2. The fourth step ST4 is a detaching process.

The detaching process (fourth step ST4) includes detaching, from the support 2, the part W1, which is one part of the machined plate material Wb, and the offcuts W2, which is another part of the machined plate material Wb. The part W1 and the offcuts W2 may be sequentially detached from the support 2. Alternatively, the part W1 and the offcuts W2 may be simultaneously detached from the support 2. The machined plate material Wb may be detached from the support 2 using the suckers capable of sucking the machined plate material Wb, or may be detached from the support 2 using the fork capable of scooping up the machined plate material Wb.

As illustrated in FIG. 9, the detaching process (fourth step ST4) may be performed using the plate material transfer apparatus 6 (for example, the robot hand 60). Alternatively, the detaching process (fourth step ST4) may be performed manually.

In an example illustrated in FIG. 9, the machined plate material Wb is detached from the support 2, which is disposed in a machining region RG1 of the laser beam machining apparatus 1.

Alternatively, as indicated by a broken line arrow in FIG. 10, after the support 2 is moved to a detachment region RG2, the machined plate material Wb may be detached from the support 2, which is disposed in the detachment region RG2. In an example illustrated in FIG. 10, a transfer apparatus 15 transfers the support 2 to the detachment region RG2 from the machining region RG1. Then, the machined plate material Wb is detached from the support 2, which is disposed in the detachment region RG2. The machined plate material Wb may be detached using the suckers capable of sucking the machined plate material Wb, or may be detached using the fork capable of scooping up the machined plate material Wb.

FIG. 11 illustrates part of the support 2 after the detaching process (fourth step ST4) is performed (in other words, part of the support 2 after the machined plate material Wb is detached). Dross D, which is formed by irradiating the plate material W with the laser beam B, adheres to the support 2. More specifically, when the plate material W is irradiated with the laser beam B, the plate material W partially changes into a molten material. Such a molten material solidifies, thereby forming the dross D, and the dross D adheres to the support 2. It is to be noted herein the dross means a lump having an arbitrary shape formed by solidification of a material (more specifically, a metal material) melted while being irradiated with the laser beam B.

In a fifth step ST5, the dross D is removed from the support 2. The fifth step ST5 is a dross removing process.

As illustrated in FIG. 12, the dross removing step (fifth step ST5) may include transferring the support 2, from which the machined plate material Wb has been detached, to the machining region RG1 from the detachment region RG2 using the transfer apparatus 15. Alternatively, the transfer of the support 2 using the transfer apparatus 15 may be omitted. For example, as illustrated in FIG. 9, when the machined plate material Wb is detached from the support 2, which is disposed in the machining region RG1 of the laser beam machining apparatus 1, the support 2 does not move from the machining region RG1. In this case, it is not necessary to transfer the support 2 to the machining region RG1 from the detachment region RG2 using the transfer apparatus 15.

As illustrated in FIGs. 13 and 14, the dross removing process (fifth step ST5) includes bringing a tool 91 (for example, a cutting tool 91m) in a rotating state into contact with the dross D, which adheres to the support 2 resulting from the irradiation of the plate material W with the laser beam B. The tool 91 in the rotating state comes into contact with the dross D, and thus the dross D is removed from the support 2.

A laser beam machining method according to the first embodiment includes the dross removing process. In the dross removing process, the tool 91 in the rotating state is brought into contact with the dross D, and thus the dross D is removed from the support 2. In the laser beam machining method according to the first embodiment, since the dross D is removed using the tool 91 in the rotating state, the dross D is removed more reliably than a case where an operator removes the dross with a brush. The burden on the operator is also reduced.

In addition, since the dross D is removed from the support 2 more reliably, the replacement frequency of the support 2 is reduced, so that the support 2 can be used for a longer period of time. In this manner, the load on the environment is reduced.

Furthermore, since the dross D is removed from the plurality of top portions TP of the support 2, the plurality of top portions TP and the plate material to be subjected to the laser machining next are prevented from being welded together via the dross D, or welding them together via the dross D is eliminated or minimized. In addition, since the dross D is removed from the plurality of top portions TP of the support 2, distortion of the plate material W, which is placed on the support 2, is eliminated or minimized. Thus, a decrease in the machining accuracy of the plate material W is eliminated or minimized.

It is to be noted that in the first embodiment, the frequency at which the dross removing process (fifth step ST5) is performed may be lower than the frequency at which the plate material machining process (third step ST3) is performed. In other words, after the plurality of plate materials W are machined by the irradiation with the laser beam B, the tool 91 in the rotating state may be brought into contact with the dross D, which adheres to the support 2, and thus the dross D may be removed from the support 2. For example, in the daytime, the above-described second step ST2 to the above-described fourth step are repeatedly performed, and thus the plurality of plate materials W may be machined. In the nighttime, the above-described fifth step ST5 is performed, and thus the dross D may be removed from the support 2.

### (Optional and Additional Configurations)

Subsequently, with reference to FIGs. 1 to 25, description will be made with regard to optional and additional configurations that can be adopted in the laser beam machining method according to the first embodiment or the laser beam machining apparatus 1 according to the first embodiment to be described later.

### (Support 2)

In an example illustrated in FIG. 16, the support 2 includes a plurality of plate components 21, each of which is disposed in upright attitude relative to a horizontal plane (for example, an X-Y plane in FIG. 16). More specifically, the support 2 includes a first plate component 21-1 and a second plate component 21-2, each of which is disposed in upright attitude relative to the horizontal plane. The support 2 may include a third plate component 21-3 and a fourth plate component 21-4, each of which is disposed in upright attitude relative to the horizontal plane. The support 2 may include ten or more plate components 21, each of which is disposed in upright attitude relative to the horizontal plane, or may include 20 or more plate components 21, each of which is disposed in upright attitude relative to the horizontal plane. Each plate component 21 is made of, for example, metal.

In an example illustrated in FIG. 16, the longitudinal direction of each plate component 21 is substantially parallel to the horizontal plane. The width direction of each plate component 21 is substantially parallel to the vertical direction. In addition, the thickness direction of each plate component 21 is substantially parallel to the horizontal plane.

In an example illustrated in FIG. 17, the first plate component 21-1 is disposed in a region between a plate component 21E and a plate component 21F. The plate component 21E is disposed at one end (more specifically, an end portion on +X direction side) of the support 2, and the plate component 21F is disposed at the other end (more specifically, an end portion on -X direction side) of the support 2. Alternatively, the first plate component 21-1 may be the plate component 21E, which is disposed at one end of the support 2, or may be the plate component 21F, which is disposed at the other end of the support 2.

In the example illustrated in FIG. 17, the second plate component 21-2 is a plate component disposed to be adjacent to the first plate component 21-1. The first plate component 21-1 and the second plate component 21-2 are disposed substantially parallel to each other. The lengths of the first plate component 21-1 and the second plate component 21-2 are, for example, equal to or greater than 50 cm or equal to or greater than 100 cm.

Herein, "K" is defined as any integer equal to or greater than 2 (more specifically, "K" is 2, 3, 4, 5, 6, 7, and so on), and "N" is defined as a number obtained by adding "1" to "K". In the example illustrated in FIG. 17, the support 2 includes a "K"th plate component 21-K (for example, the second plate component 21-2) and an "N"th plate component 21-N (for example, the third plate component 21-3), which is disposed to be adjacent to the "K"th plate component 21-K. The "K"th plate component 21-K (for example, the second plate component 21-2) and the "N"th plate component 21-N (for example, the third plate component 21-3) may be disposed to be substantially parallel to each other.

As illustrated in FIG. 16, each of the plurality of plate components 21 includes an edge portion EG having a saw blade shape. The edge portion EG having a saw blade shape of each plate component 21 includes a plurality of top portions TP and a plurality of bottom portions BP. In the edge portion EG having a saw blade shape, the top portion TP and the bottom portion BP are alternately arranged in the longitudinal direction of each plate component 21.

In the above-described placing process (second step ST2), the plate material W is placed on the plurality of edge portions EG each having a saw blade shape (more specifically, the plate material W is placed on the plurality of top portions TP of the plurality of edge portions EG). Also, in the above-described plate material machining process (third step ST3), the plate material W, which is placed on the plurality of edge portions EG each having a saw blade shape, is irradiated with the laser beam B.

In the example illustrated in FIG. 17, the support 2 is a pallet PT, which can be transferred. The pallet PT includes a plurality of plate components 21 and a frame body 23 to which the plurality of plate components 21 are attached. The pallet PT may include a bottom plate 25, which prevents the dross D from falling below the pallet PT. The bottom plate 25 may be disposed to close a bottom opening of the frame body 23. Alternatively, the bottom plate 25 may be omitted, and the bottom of the frame body 23 may be open. In this case, in the laser beam machining apparatus 1, a conveyor for conveying unnecessary substances such as the dross D may be disposed under the frame body 23.

### (Dross Removing Process)

In an example illustrated in FIG. 14, the above-described dross removing process (fifth step ST5) includes removing the dross D from the plurality of plate components 21. More specifically, in the example illustrated in FIG. 14, the above-described dross removing process (fifth step ST5) includes bringing the tool 91 in the rotating state into contact with the dross D, which adheres to at least one of the plurality of plate components 21. Thus, the dross D, which adheres to the plurality of plate components 21, is removed by the tool 91. For example, by bringing the tool 91 in the rotating state into contact with the dross D, which adheres to the first plate component 21-1 resulting from the irradiation of the plate material W with the laser beam B, the dross D is removed from the first plate component 21-1. In addition, by bringing the tool 91 in the rotating state into contact with the dross D, which adheres to the second plate component 21-2 resulting from the irradiation of the plate material W with the laser beam B, the dross D is removed from the second plate component 21-2.

In the example illustrated in FIGs. 6 and 13, the machining of the plate material W with the laser beam and the removal of the dross D from the support 2 (in other words, the process of bringing the tool 91 in the rotating state into contact with the dross D to remove the dross D from the support 2) are performed in an identical region in a plan view. More specifically, the dross D is removed from the support 2 in the region identical to the machining region RG1, in which the plate material W is subjected to the machining with the laser beam. This eliminates the need for a dedicated space for removing the dross D.

In an example illustrated in FIG. 18, the above-described dross removing process (fifth step ST5) includes moving the tool 91 in the rotating state (more specifically, the cutting tool 91m) along a longitudinal direction LD of the first plate component 21-1 to bring the tool 91 in the rotating state (more specifically, the cutting tool 91m) into contact with the dross D. The tool 91 in the rotating state moves along the longitudinal direction LD of the first plate component 21-1, and then a plurality of pieces of dross D, which adhere to the first plate component 21-1, are efficiently removed from the first plate component 21-1. As illustrated in FIG. 18, a rotation axis AX of the tool 91 may be substantially perpendicular to the horizontal plane.

The above-described dross removing process (fifth step ST5) includes moving the tool 91 in the rotating state along the longitudinal direction LD of the first plate component 21-1, in a state in which, for example, the tool 91 in the rotating state is brought into contact with a first side surface 21a-1 of the first plate component 21-1 or in a state in which the tool 91 in the rotating state is slightly spaced apart from the first side surface 21a-1 of the first plate component 21-1. The first plate component 21-1 in a curved state (in other words, a bent state) is attached to the frame body 23, in some cases. In such cases, when the tool 91 in the rotating state moves along the longitudinal direction LD of the first plate component 21-1, the distance between the tool 91 and the first side surface 21a-1 of the first plate component 21-1 may vary depending on the curvature of the first plate component 21-1.

As illustrated in FIG. 19, the first plate component 21-1 includes the first side surface 21a-1 and a second side surface 21b-1. The distance between the first side surface 21a-1 and the second side surface 21b-1 corresponds to the thickness of the first plate component 21-1. The first plate component 21-1 includes a first end portion 21c and a second end portion 21d. The direction from the first end portion 21c toward the second end portion 21d (or the direction from the second end portion 21d toward the first end portion 21c) corresponds to the longitudinal direction of the first plate component 21-1. Herein, the direction from the first end portion 21c of the first plate component 21-1 toward the second end portion 21d of the first plate component 21-1 is defined as a "first direction DR1", and a direction opposite to the first direction DR1 is defined as a "second direction DR2".

As illustrated in FIG. 19, the above-described dross removing process (fifth step ST5) may include moving the tool 91 in the rotating state in the first direction DR1 along the first side surface 21a-1 of the first plate component 21-1. The tool 91 in the rotating state is moved in the first direction DR1 along the first side surface 21a-1, and thus the plurality of pieces of dross D, which adhere to the first side surface 21a-1, are efficiently removed from the first side surface 21a-1.

As illustrated in FIG. 20, the above-described dross removing process (fifth step ST5) may include moving the tool 91 in the rotating state in the second direction DR2 (or the first direction DR1) along the second side surface 21b-1 of the first plate component 21-1. Since the tool 91 in the rotating state is moved in the second direction DR2 (or the first direction DR1) along the second side surface 21b-1, the plurality of pieces of dross D, which adhere to the second side surface 21b-1, are efficiently removed from the second side surface 21b-1.

In an example illustrated in FIG. 21, the above-described dross removing process (fifth step ST5) includes moving the tool 91 in the rotating state along a first path PA1, which is located between the first plate component 21-1 and the second plate component 21-2, so as to bring the tool 91 in the rotating state into contact with the dross D, which adheres to the first plate component 21-1. In the example illustrated in FIG. 21, a space between the first plate component 21-1 and the second plate component 21-2 is used as a movement path of the tool 91. In addition, since the tool 91 in the rotating state is moved along the first path PA1, the plurality of pieces of dross D, which adhere to the second side surface 21b-1 of the first plate component 21-1, are efficiently removed from the second side surface 21b-1.

In an example illustrated in FIG. 22, the above-described dross removing process (fifth step ST5) includes moving the tool 91 in the rotating state along a second path PA2, which is located between the first plate component 21-1 and the second plate component 21-2, so as to bring the tool 91 in the rotating state into contact with the dross D, which adheres to the second plate component 21-2. As understood from FIGs. 21 and 22, the first path PA1 is a path closer to the first plate component 21-1 than the second path PA2. The second path PA2 is a path closer to the second plate component 21-2 than the first path PA1.

In the examples illustrated in FIGs. 21 and 22, since the tool 91 in the rotating state moves along two paths (PA1 and PA2), which are located between the first plate component 21-1 and the second plate component 21-2, the plurality of pieces of the dross D are efficiently removed from the side surface 21b-1 of the first plate component 21-1, the side surface 21b-1 facing the second plate component 21-2 (see FIG. 21), and the plurality of pieces of the dross D are efficiently removed from the side surface 21a-2 of the second plate component 21-2, the side surface 21a-2 facing the first plate component 21-1 (see FIG. 22).

In the example illustrated in FIG. 18, the above-described dross removing process (fifth step ST5) includes bringing the tool 91 in the rotating state into contact with the dross D, which adheres to the first plate component 21-1, with a tip end Te of the tool 91 lower than the plurality of bottom portions BP of the edge portion EG having a tooth blade shape.

The tip end Te of the tool 91 is lower than the plurality of bottom portions BP of the edge portion EG, so that the dross D can be effectively removed from the edge portion EG having a saw blade shape. The tool 91 in the rotating state is preferably moved along the longitudinal direction LD of the first plate component 21-1 with the tip end Te of the tool 91 lower than the plurality of bottom portions BP of the edge portion EG having a saw blade shape. In this case, it becomes possible to remove the plurality of pieces of dross D efficiently and effectively from the entirety of the edge portion EG having a saw blade shape.

### (Modification of Dross Removing Process)

FIGs. 18 to 22 illustrate examples in which the dross removing process is performed by moving the tool 91 in the rotating state along the side surface of the plate component 21, which constitutes the support 2. Alternatively, as illustrated in FIG. 23, the above-described dross removing process (fifth step ST5) may include moving the tool 91 (more specifically, the cutting tool 91m) in the rotating state along a first plane PL1, on which the plurality of top portions TP are located, so as to bring the tool 91 in the rotating state into contact with the dross D, which adheres to at least one of the plurality of top portions TP of the support 2.

In a modification illustrated in FIG. 23, the above-described dross removing process (fifth step ST5) includes moving the tool 91 in the rotating state along the longitudinal direction LD of the first plate component 21-1 on the above-described first plane PL1. Alternatively, the above-described dross removing process (fifth step ST5) may include moving the tool 91 in the rotating state, independently of the longitudinal direction of the first plate component 21-1, on the above-described first plane PL1 to remove the dross D from the plurality of top portions TP of the support 2.

In the modification illustrated in FIG. 23, it is difficult to remove the dross D, which adheres to a lower position of the plate component 21, as compared with the examples illustrated in FIGs. 18 to 22. On the other hand, in the modification illustrated in FIG. 23, even in a case where the plate component 21 is largely bent, the dross D, which adheres to the plurality of top portions TP, can be efficiently removed. In addition, according to the modification illustrated in FIG. 23, in a case where the plurality of plate components 21 are disposed in a lattice shape (see FIG. 24), the dross D, which adheres to the plurality of top portions TP, can be efficiently removed without frequently moving the tool 91 up and down. It is to be noted that in the modification illustrated in FIG. 23, the cutting tool 91m may be a milling cutter. When a milling cutter having a large outer diameter is used, such a milling cutter may remove the dross D from two or more top portions TP simultaneously.

### (Multitasking Machine 1A)

In an example illustrated in FIG. 6, the above-described plate material machining process (third step ST3) is performed using a multitasking machine 1A. The multitasking machine 1A includes a first head 31, which irradiates the laser beam B, and a second head 41, to which the tool 91 is attached.

In the example illustrated in FIG. 6, the above-described plate material machining process (that is, the process of machining the plate material W) includes irradiating the plate material W with the laser beam B from the first head 31 of the multitasking machine 1A. The laser beam B is irradiated on the plate material W from the first head 31, and thus the plate material W is cut.

In the example illustrated in FIG. 13, the above-described dross removing process (fifth step ST5) is performed using the multitasking machine 1A.

As illustrated in FIG. 14, the above-described dross removing process (that is, the process of removing the dross D from the support 2) includes rotating the tool 91 (more specifically, the cutting tool 91m), which is attached to the second head 41 of the multitasking machine 1A, about the rotation axis AX. In addition, the above-described dross removing process (that is, the process of removing the dross D from the support 2) includes bringing the tool 91 in the rotating state of rotating about the rotation axis AX into contact with the dross D, which adheres to the support 2 (for example, the first plate component 21-1).

Since the plate material machining process (third step ST3) and the dross removing process (fifth step ST5) are both performed using the multitasking machine 1A, it becomes possible to easily switch between the plate material machining and the dross removal. This eliminates the need for a dedicated space for removing the dross D.

In the example illustrated in FIG. 13, the above-described dross removing process (that is, the process of removing the dross D from the support 2) includes moving the second head 41, to which the tool 91 (more specifically, the cutting tool 91m) is attached, together with the first head 31.

In the dross removing process (fifth step ST5), when the second head 41 moves together with the first head 31, at least part of the mechanism for moving the second head 41 is also used as at least part of the mechanism for moving the first head 31, or vice versa. Therefore, it becomes possible to make the entire size of the moving mechanism compact, as compared with a case where the moving mechanism of the second head 41 and the moving mechanism of the first head 31 are provided completely individually.

### (Second Tool 92)

In an example illustrated in FIG. 25, the plate material machining process (third step ST3) includes bringing a second tool 92 in a rotating state into contact with the plate material W, which is placed on the support 2 (more specifically, the plurality of plate components 21), to machine the plate material W. For example, the plate material machining process (third step ST3) includes bringing the second tool 92 in the rotating state into contact with the plate material W, which is placed on the support 2, to form a through hole Wh in the plate material W. The second tool 92 may be a drill or a threading tool (for example, a tap tool).

In the example illustrated in FIG. 25, the second tool 92 is attached to a head 40 (more specifically, the second head 41 of the multitasking machine 1A). In this case, the plate material machining process (third step ST3) includes moving the head 40 (more specifically, the second head 41) to bring the second tool 92 in the rotating state into contact with the plate material W, which is placed on the support 2, to machine the plate material W. In this manner, the plate material W is machined by the second tool 92 (for example, the through hole is formed in the plate material W).

### (Tool 91)

In the dross removing process, the tool 91, which comes into contact with the dross, is, for example, the cutting tool 91m. The cutting tool 91m in the rotating state is capable of scraping off the dross D from the plate component 21. The tool 91 may be a more robust tool than the second tool 92. For example, the outer diameter of the tool 91 may be larger than the outer diameter of the second tool 92. In addition, in order to scrape off the dross D at a position lower than the plate material W, which is placed on the support 2, the outer diameter of the tool 91 may be larger than the outer diameter of the second tool 92, and the tool length of the tool 91 may be longer than the tool length of the second tool 92.

### (Change of Tool)

The head 40 (more specifically, the second head 41 of the multitasking machine 1A) may be capable of selectively holding the second tool 92 (see FIG. 25) for machining the plate material and the tool 91 (see FIG. 14) for removing the dross. In other words, the second tool 92, which is attached to the head 40, may be changeable with the tool 91 for removing the dross. The tool 91, which is attached to the head 40, may also be changeable with the second tool 92 for machining the plate material.

The laser beam machining method according to the first embodiment may include: (1) a process of machining the plate material W by irradiating the plate material W, which is placed on the support 2, with the laser beam B (see FIG. 6); (2) a process of attaching the second tool 92 to the head 40 (more specifically, the second head 41); and (3) a process of machining the plate material W with the second tool 92, which is attached to the head 40 (more specifically, the second head 41), by bringing the second tool 92 in the rotating state into contact with the plate material W, which is placed on the support 2 (see FIG. 25). In addition, the laser beam machining method according to the first embodiment may include: (4) a process of detaching the second tool 92 from the head 40 (more specifically, the second head 41); (5) a process of attaching the tool 91 (more specifically, the tool for removing the dross) to the head 40 (more specifically, the second head 41); and (6) a process of removing the dross D from the support 2 by bringing the tool 91 in the rotating state into contact with the dross D, which adheres to the support 2 (see FIG. 14).

The second tool 92 for machining the plate material and the tool 91 for removing the dross are different ones from each other. Thus, by bringing the tool 91 for removing the dross into contact with the dross, the dross is removed from the support 2 without bringing the second tool 92 for machining the plate material into contact with the dross. This prevents damage of the second tool 92 due to contact with the dross.

### (Laser Beam Machining Apparatus 1)

As illustrated in FIG. 26, the laser beam machining apparatus 1 according to the first embodiment includes: (1) a laser beam irradiation apparatus 3 including the first head 31, which irradiates the plate material W, which is supported by a support 2, with a laser beam; (2) the second head 41, which supports the tool 91 (more specifically, the cutting tool 91m) to be rotatable; (3) a rotation drive 44, which rotates the tool 91; (4) a mover 5, which moves the second head 41 relative to the support 2; and (5) a controller 7, which controls the laser beam irradiation apparatus 3, the rotation drive 44, and the mover 5. The controller 7 is capable of selectively performing (6) a first machining mode M1 of irradiating the plate material W with the laser beam B from the first head 31 (see FIG. 6), and (7) a dross removing mode M2 of removing the dross D from the support 2 by bringing the tool 91 in the rotating state into contact with the dross D, which adheres to the support 2 resulting from irradiating the plate material W with the laser beam B (see FIG. 13).

In the laser beam machining apparatus 1 according to the first embodiment, the dross D is removable using the tool 91 in the rotating state. Therefore, the dross D is more reliably removed than a case where the operator removes the dross with a brush. The burden on the operator is also reduced.

In addition, since the dross D is more reliably removed from the support 2, the replacement frequency of the support 2 is reduced, so that the support 2 can be used for a longer period of time. In this manner, the load on the environment is reduced.

Furthermore, since the dross D is removed from the plurality of top portions TP of the support 2, the plurality of top portions TP and the plate material to be subjected to the laser machining next are prevented from being welded together via the dross D, or welding them together via the dross D is eliminated or minimized. In addition, since the dross D is removed from the plurality of top portions TP of the support 2, distortion of the plate material W, which is placed on the support 2, is eliminated or minimized. Thus, a decrease in the machining accuracy of the plate material W is eliminated or minimized.

Further, the laser beam machining apparatus 1 is capable of performing both the laser machining and the dross removal. This eliminates the need for providing a dedicated space for the dross removal outside the laser beam machining apparatus 1. The laser beam machining apparatus 1 may be the multitasking machine 1A, which is capable of performing both machining of the plate material W with the laser beam and machining of the plate material W with the tool.

It is to be noted that at least part of the mechanism for moving the first head 31 may also be used as at least part of the mechanism for moving the second head 41, or vice versa. Alternatively, in the laser beam machining apparatus 1, the mechanism for moving the first head 31 and the mechanism for moving the second head 41 may be provided completely individually.

### (Optional and Additional Configurations)

Subsequently, with reference to FIGs. 1 to 37, optional and additional configurations that can be adopted in the laser beam machining apparatus 1 according to the first embodiment or the laser beam machining method according to the first embodiment will be described.

### (Support 2)

In an example illustrated in FIG. 26, the support 2 is supported by the laser beam machining apparatus 1 (for example, a base 50 of the laser beam machining apparatus 1). In performing the above-described plate material machining process (third step ST3), the support 2 is preferably fixed to the laser beam machining apparatus 1 so as to keep a state in which the support 2 is positioned in the machining region RG1. In addition, in performing the above-described dross removing process (fifth step ST5), the support 2 is preferably fixed to the laser beam machining apparatus 1 so as to keep a state in which the support 2 is positioned in the machining region RG1.

### (Mover 5)

In the example illustrated in FIG. 26, the mover 5 moves the second head 41 relative to the support 2. The mover 5 also moves the first head 31 relative to the plate material W, which is supported by the support 2.

In the example illustrated in FIG. 26, the mover 5 includes moving bodies (51a and 53a) that supports both the first head 31 and the second head 41, and drives (51b and 53b) that respectively move the moving bodies (51a and 53a). At least part of the mechanism for moving the first head 31 is also used as at least part of the mechanism for moving the second head 41, or vice versa. Thus, a reduction in the number of components and space saving in the laser beam machining apparatus are achieved.

In an example illustrated in FIG. 27, the mover 5 includes a first mover 51. The first mover 51 includes a first moving body 51a, and a first drive 51b (for example, a first motor), which moves the first moving body 51a.

In the example illustrated in FIG. 26, the first moving body 51a supports both the first head 31 and the second head 41.

In the example illustrated in FIG. 26, the first moving body 51a functions as a Z saddle, and the first drive 51b functions as a Z-axis drive unit. The first drive 51b moves the first moving body 51a in a direction parallel to the vertical direction (in other words, Z-axis direction). More specifically, the first drive 51b is capable of moving the first moving body 51a downward so that the first moving body 51a approaches the support 2. The first drive 51b is also capable of moving the first moving body 51a upward so that the first moving body 51a moves away from the support 2.

In the example illustrated in FIG. 26, the first drive 51b (Z-axis drive unit) is capable of moving both the first head 31 and the second head 41 in Z-axis direction.

In an example illustrated in FIG. 28, the mover 5 includes a second mover 53. The second mover 53 includes a second moving body 53a and a second drive 53b (for example, a second motor), which moves the second moving body 53a. The second moving body 53a supports the first moving body 51a to be movable in a direction parallel to the vertical direction.

In the example illustrated in FIG. 28, the second moving body 53a functions as a Y saddle, and the second drive 53b functions as a Y-axis drive unit. The second drive 53b moves the second moving body 53a in a direction parallel to the horizontal plane (more specifically, Y-axis direction). In the example illustrated in FIG. 28, Y-axis direction is parallel to the longitudinal direction of the first plate component 21-1.

In the example illustrated in FIG. 28, the mover 5 includes a third mover 55. The third mover 55 includes a third moving body 55a and a third drive 55b (for example, a third motor), which moves the third moving body 55a. The third moving body 55a supports the second moving body 53a to be movable in a direction parallel to Y-axis direction.

In the example illustrated in FIG. 28, the third moving body 55a functions as an X saddle, and the third drive 55b functions as an X-axis drive unit. The third drive 55b moves the third moving body 55a in a direction parallel to the horizontal plane (more specifically, X-axis direction perpendicular to Z axis and Y axis). In the example illustrated in FIG. 28, X-axis direction is perpendicular to the longitudinal direction of the first plate component 21-1.

As illustrated in FIG. 13, the third moving body 55a may be made up of a portal structure. In the example illustrated in FIG. 13, in a plan view, the third moving body 55a is movable to traverse the machining region RG1 (more specifically, a laser machining region). The third moving body 55a is supported by the base 50 so that the third moving body 55a is movable in a direction parallel to X-axis direction.

In the example illustrated in FIG. 26, the mover 5 includes a fourth mover 57. The fourth mover 57 includes a fourth moving body 57a and a fourth drive 57b (for example, a motor or an actuator), which moves the fourth moving body 57a.

The fourth drive 57b moves the second head 41 relative to the first head 31. More specifically, the fourth drive 57b moves the second head 41 relative to the first head 31 in the vertical direction.

In examples illustrated in FIGs. 26 and 29, the fourth drive 57b is capable of moving the second head 41 relative to the first head 31 between an forward position P1 (see FIG. 29) and a backward position P2 (see FIG. 26). As illustrated in FIG. 29, when the second head 41 is located at the forward position P1, the tip end of the tool 91, which is attached to the second head 41, is closer to the support 2 than a tip end of the first head 31 (in other words, a laser head). Therefore, when the dross D is removed by the tool 91, the first head 31 cannot be an obstacle. Also as illustrated in FIG. 26, when the second head 41 is located at the backward position P2, the tip end of the first head 31 (in other words, the laser head) is closer to the support 2 than the tip end of the second head 41 (or a tip end of the tool 91, which is attached to the second head 41). Therefore, the second head 41 cannot be an obstacle in the laser machining of the plate material W, which is placed on the support 2.

In the example illustrated in FIG. 29, the fourth moving body 57a is supported by the first moving body 51a so that the fourth moving body 57a is movable in the vertical direction, and the first moving body 51a is supported by the second moving body 53a so that the first moving body 51a is movable in the vertical direction. Alternatively, as illustrated in FIG. 30, the first moving body 51a, which supports the first head 31, and the fourth moving body 57a, which supports the second head 41, may be supported by the second moving body 53a so that the first moving body 51a and the fourth moving body 57a are movable in the vertical direction independently of each other.

In the example illustrated in FIG. 29, the second drive 53b (Y-axis drive unit) is capable of moving both the first head 31 and the second head 41 in Y-axis direction. The mechanism for moving the first head 31 in Y-axis direction is also used as the mechanism for moving the second head 41 in Y-axis direction, or vice versa, so that the entire size of the moving mechanism can be made compact.

Alternatively, as illustrated in FIG. 31, the mover 5 may include the second drive 53b and a fifth drive 58b. The second drive 53b moves the first head 31 in a direction parallel to the horizontal plane (more specifically, Y-axis direction), and the fifth drive 58b moves the second head 41 in a direction parallel to the horizontal plane (more specifically, Y-axis direction).

In an example illustrated in FIG. 31, the first head 31 is supported by the second moving body 53a via the first moving body 51a. The second drive 53b moves the second moving body 53a in Y-axis direction relative to the third moving body 55a.

In the example illustrated in FIG. 31, the second head 41 is supported by the fifth moving body 58a via the fourth moving body 57a. The fifth drive 58b moves the fifth moving body 58a in Y-axis direction relative to the third moving body 55a. In addition, the fourth drive (not illustrated in FIG. 31) moves the fourth moving body 57a and the second head 41 in Z-axis direction (in other words, the vertical direction).

In the example illustrated in FIG. 28, the third drive 55b (X-axis drive unit) is capable of moving both the first head 31 and the second head 41 in X-axis direction. The mechanism for moving the first head 31 in X-axis direction is also used as the mechanism for moving the second head 41 in X-axis direction, or vice versa, so that the entire size of the moving mechanism can be made compact.

### (Laser Beam Irradiation Apparatus 3)

As illustrated in FIG. 32, the laser beam irradiation apparatus 3 includes the first head 31, a laser light source 33, and an optical component 35 (examples including an optical fiber) that transmits the laser from the laser light source 33 to the first head 31.

It is to be noted that the first head 31 may include a head main body 31a and an attachment 31b. When the dross D is removed using the tool 91, which is attached to the second head 41, the attachment 31b (for example, an attachment including a lens and a laser emission port OP) of the first head 31 may be detached from the head main body 31a. Alternatively or additionally, when the dross D is removed using the tool 91, which is attached to the second head 41, a cover for protecting the optical component may be attached to the head main body 31a.

### (Second Head 41)

In the example illustrated in FIG. 29, the second head 41 supports the tool 91 to be rotatable about the rotation axis AX. The second head 41 includes a rotation body 42 and a frame 43, which supports the rotation body 42 to be rotatable. The tool 91 is attachable to the rotation body 42.

### (Rotation Drive 44)

In the example illustrated in FIG. 29, the laser beam machining apparatus 1 includes the rotation drive 44 (for example, a motor 44m), which rotates the tool 91 (for example, the cutting tool 91m) about the rotation axis AX. The rotation drive 44 rotates the rotation body 42 about a first axis AX1, and thereby rotates the tool 91 about the rotation axis AX.

In the example illustrated in FIG. 29, the fourth moving body 57a supports both the rotation drive 44 and the second head 41. More specifically, the fourth moving body 57a, the rotation drive 44, and the second head 41 are integrally movable in the vertical direction.

### (Automatic Tool Changer 8)

In an example illustrated in FIG. 33, the laser beam machining apparatus 1 includes an automatic tool changer 8. The automatic tool changer 8 changes the tool held by the second head 41 to another tool. For example, the automatic tool changer 8 changes the second tool 92 for machining the plate material and held by the second head 41 (more specifically, the rotation body 42 of the second head 41) to the tool 91 for removing the dross.

As illustrated in FIG. 34, the automatic tool changer 8 may change a dummy tool 93, which is held by the second head 41 (more specifically, the rotation body 42 of the second head 41), to the tool 91 for removing the dross. It is to be noted that the dummy tool 93 protects a tool attachment portion of the rotation body 42 when the second head 41 is not used.

The automatic tool changer 8 is also capable of exchanging the tool 91 for removing the dross and held by the second head 41 with another tool (for example, the second tool 92 for machining the plate material or the dummy tool 93).

The automatic tool changer 8 may include a tool change arm 81, which is rotatable about a second axis AX2. The tool change arm 81 is capable of simultaneously gripping two tools to be changed.

### (Controller 7)

In the example illustrated in FIG. 26, the controller 7 controls the laser beam irradiation apparatus 3, the rotation drive 44, and the mover 5 (examples including the first drive 51b, the second drive 53b, the third drive 55b, and the fourth drive 57b). The controller 7 may control the plate material transfer apparatus 6 (see FIG. 3). The controller 7 may also control the automatic tool changer 8.

In the example illustrated in FIG. 26, the controller 7 transmits an emission command E1 to the laser beam irradiation apparatus 3 (for example, the laser light source 33) to cause the laser beam B to be emitted from the first head 31. More specifically, the controller 7 transmits the emission command E1 to the laser beam irradiation apparatus 3 (for example, the laser light source 33), and the laser beam irradiation apparatus 3, which receives the emission command E1, emits the laser beam B from the first head 31 (more specifically, the laser emission port of the first head 31).

In the example illustrated in FIG. 29, the controller 7 transmits a rotation command R1 to the rotation drive 44 (for example, the motor 44m) to rotate the tool 91 (more specifically, the cutting tool 91m). More specifically, the controller 7 transmits the rotation command R1 to the rotation drive 44, and the rotation drive 44, which receives the rotation command R1, rotates the tool 91 about the rotation axis AX along the longitudinal direction of the tool 91.

In the example illustrated in FIG. 26 (or FIG. 29), the controller 7 transmits a movement command S to the mover 5 to move the first head 31 and/or the second head 41. More specifically, the controller 7 transmits the movement command S to the mover 5, and the mover 5, which receives the movement command S, moves the first head 31 and/or the second head 41.

As illustrated in FIG. 35, the controller 7 includes a hardware processor 70 (hereinafter, simply referred to as the "processor 70"), a memory 72, a communication circuit 74, and an input device 76 (for example, a display 762, which is equipped with a touch panel). The processor 70, the memory 72, the communication circuit 74, and the input device 76 are connected with one another through a bus 78.

The memory 72 stores data and a program 722. The program 722 stored in the memory 72 may include a first program 722a for performing the above-described first machining mode M1, and may include a second program 722b for performing the above-described dross removing mode M2. The program 722 may also include a third program 722c for performing a second machining mode M3 to be described later. Furthermore, the program 722 may include a fourth program 722d for performing a tool exchanging mode M4 to be described later. In addition, the program 722 may include a fifth program 722e for performing a plate material transferring mode M5 to be described later.

The memory 72 is a storage medium readable by the processor 70 of the controller 7. The memory 72 may be, for example, a nonvolatile or volatile semiconductor memory such as a RAM, a ROM, or a flash memory, may be a magnetic disk, or may be a memory in another format.

Data necessary for the laser machining may be input into the controller 7 via the input device 76, or may be input into the controller 7 from another computer through the communication circuit 74. The data necessary for the laser machining (examples of the data including shape data of the plate material W, shape data of the part W1, and first path data 726a for defining the first movement path along which the first head 31 is to move) is stored in the memory 72.

Data necessary for removing the dross (examples of the data including second path data 726b for defining the second movement path along which the tool 91 is to move) is stored in the memory 72.

Data necessary for machining the plate material using the second tool 92 may be input into the controller 7 via the input device 76, or may be input into the controller 7 from another computer through the communication circuit 74. The data necessary for machining the plate material using the second tool 92 (examples of the data including shape data of the plate material W, shape data of the part W1, and third path data 726c for defining the third movement path along which the second tool 92 is to move) is stored in the memory 72.

The input device 76 is not limited to the display 762, which is equipped with the touch panel. For example, the controller 7 may include the input device 76 such as a button, a switch, a lever, a pointing device, or a keyboard, and a display that displays the data that has been input into the input device 76 or other information. In addition, a plurality of computers may cooperate with each other to function as the controller 7. Further, the memory 72 may be distributed in a plurality of locations. For example, the memory 72 may be partially included in a cloud storage.

When the processor 70 of the controller 7 executes the program 722, which is stored in the memory 72, the controller 7 generates a control command. The communication circuit 74 transmits the control command to the to-be-controlled equipment (more specifically, the laser beam irradiation apparatus 3, the rotation drive 44, the mover 5, the plate material transfer apparatus 6, the automatic tool changer 8, and/or any other equipment). In this manner, the processor 70 executes the program 722, and thus the controller 7 is capable of controlling the laser beam irradiation apparatus 3, the rotation drive 44, the mover 5, the plate material transfer apparatus 6, and the automatic tool changer 8.

### (First Machining Mode M1)

The controller 7 controls the laser beam irradiation apparatus 3 and the mover 5, and is thus capable of performing the first machining mode M1. As illustrated in FIGs. 6 and 7, the first machining mode M1 is a mode of moving the first head 31 while causing the laser beam B to be emitted from the first head 31 to machine the plate material W (more specifically, to form the part W1 from the plate material W).

For example, in the example illustrated in FIG. 26, the controller 7, which executes the program 722 (more specifically, the first program 722a), transmits the emission command E1 to the laser beam irradiation apparatus 3. The controller 7, which also executes the program 722 (more specifically, the first program 722a), transmits the movement command S to the mover 5, based on the first path data 726a, which is stored in the memory 72. The laser beam irradiation apparatus 3, which receives the emission command E1, irradiates the plate material W with the laser beam B. In addition, the mover 5, which receives the movement command S, moves the first head 31 along the first movement path. In this manner, the plate material W, which is supported by the support 2 (more specifically, the plurality of plate components 21), is irradiated with the laser beam B to form the part W1 from the plate material W.

### (Dross Removing Mode M2)

The controller 7 controls the rotation drive 44 and the mover 5, and is thus capable of performing the dross removing mode M2. As illustrated in FIGs. 13, 14, and 18 to 23, the dross removing mode is a mode of moving the second head 41, which supports the tool 91, while rotating the tool 91 (more specifically, the cutting tool 91m) to remove the dross D from the support 2 (more specifically, the plurality of plate components 21).

For example, in the example illustrated in FIG. 29, the controller 7, which executes the program 722 (more specifically, the second program 722b), transmits the rotation command R1 to the rotation drive 44. The controller 7, which also executes the program 722 (more specifically, the second program 722b), transmits the movement command S to the mover 5, based on the second path data 726b, which is stored in the memory 72. The rotation drive 44, which receives the rotation command R1, rotates the tool 91 about the rotation axis AX. In addition, the mover 5, which receives the movement command S, moves the tool 91 along the second movement path. For example, the second drive 53b, which receives the movement command S, moves the tool 91 in a direction parallel to the longitudinal direction LD of the plate component 21. In this manner, the tool 91 in the rotating state comes into contact with the dross D to remove the dross D from the support 2 (more specifically, the plurality of plate components 21).

It is to be noted that the second path data 726b may define the second movement path (see FIGs. 19 to 22) along which the tool 91 sequentially passes in the vicinity of the side surfaces of the plurality of plate components 21, or may define the second movement path (see FIG. 23) along which the tool 91 sequentially passes in the vicinity of the plurality of top portions TP of the support 2. The second path data 726b may be stored beforehand in the memory 72.

Alternatively, the controller 7 may derive a movement path, based on data of the shape data and/or any other data of the plate material W, and the second path data 726b for defining such a derived movement path may be stored in the memory 72. For example, as illustrated in FIG. 36, in comparison with a region AR1 not to be irradiated with the laser beam (for example, a region where the plate material W is not placed) in the support 2, the controller 7 may derive a movement path PC of the tool 91 so that the tool 91 intensively passes through a region AR2 to be irradiated with the laser beam (for example, a region where the plate material W is placed) in the support 2. The second path data 726b for defining such a derived movement path PC may be stored in the memory 72. It is to be noted that in FIG. 36, a region hatched with dots corresponds to the region AR2 to be irradiated with the laser beam (more specifically, the region where the plate material W is placed).

The tool 91 in the rotating state moves along the movement path PC, which has been derived by the controller 7, and thus the dross D is selectively removed from the support 2 in the region AR2 to be irradiated with the laser beam.

As illustrated in FIG. 18, the dross removing mode M2 may be a mode including moving the tool 91 (for example, the cutting tool 91m) in the rotating state along the longitudinal direction LD of the first plate component 21-1 to remove the dross D from the first plate component 21-1.

As illustrated in FIGs. 19 and 20, the dross removing mode M2 (or the dross removing process as the above-described fifth step ST5) may include moving the tool 91 in the rotating state along the first side surface 21a-1 of the first plate component 21-1, and then moving the tool 91 in the rotating state along the second side surface 21b-1 of the first plate component 21-1.

As illustrated in FIGs. 21 and 22, the dross removing mode M2 (or the dross removing process as the above-described fifth step ST5) may include moving the tool 91 in the rotating state along the first path PA1 and moving along the second path PA2. The first path PA1 is a path that is adjacent to the first plate component 21-1, that is located between the first plate component 21-1 and the second plate component 21-2, and that extends along the longitudinal direction of the first plate component 21-1. The second path PA2 is a path that is adjacent to the second plate component 21-2, that is located between the first plate component 21-1 and the second plate component 21-2, and that extends along the longitudinal direction of the second plate component 21-2.

Since the tool 91 in the rotating state passes through both the first path PA1 and the second path PA2, the plurality of pieces of dross D are efficiently removed from the side surface of the first plate component 21-1, the side surface being closer to the second plate component 21-2. The plurality of pieces of dross D are efficiently removed from the side surface of the second plate component 21-2, the side surface being closer to the first plate component 21-1.

As illustrated in FIG. 36, the dross removing mode M2 (or the dross removing process as the above-described fifth step ST5) may include moving the tool 91 in the rotating state along a third path PA3 and moving along a fourth path PA4. The third path PA3 is a path that is adjacent to the second plate component 21-2, that is located between the second plate component 21-2 and the third plate component 21-3, and that extends along the longitudinal direction of the second plate component 21-2. The fourth path PA4 is a path that is adjacent to the third plate component 21-3, that is located between the second plate component 21-2 and the third plate component 21-3, and that extends along the longitudinal direction of the third plate component 21-3.

Since the tool 91 in the rotating state pass through both the third path PA3 and the fourth path PA4, the plurality of pieces of dross D are efficiently removed from the side surface of the second plate component 21-2, the side surface being closer to the third plate component 21-3. The plurality of pieces of dross D are efficiently removed from the side surface of the third plate component 21-3, the side surface being closer to the second plate component 21-2.

As illustrated in FIG. 36, the dross removing mode M2 (or the dross removing process as the above-described fifth step ST5) may include moving the tool 91 in the rotating state along a path PA corresponding to a shape obtained by extending a rectangular wave in a direction parallel to the first direction DR1 in a plan view to sequentially remove the plurality of pieces of dross D from the plurality of plate components 21.

It is to be noted that in the example illustrated in FIG. 36, when the tool 91 moves across the first plate component 21-1 (see an arrow F3), the controller 7 may transmit an upward command to the mover 5 (more specifically, the first drive 51b), and then may transmit a downward command. The mover 5 (more specifically, the first drive 51b), which receives the upward command, temporarily moves the tool 91 upward. In this manner, when the tool 91 moves across the first plate component 21-1, interference between the tool 91 and the first plate component 21-1 is prevented. The mover 5 (more specifically, the first drive 51b), which also receives the downward command, moves the tool 91 downward. In this manner, the dross is continuously removed by the tool 91.

Alternatively or additionally, as illustrated in FIG. 23, the dross removing mode M2 may be a mode including moving the tool 91 (for example, the cutting tool 91m) in the rotating state along the first plane PL1, on which the plurality of top portions TP of the support 2 are located, to remove the dross D from the plurality of top portions TP of the support 2.

While performing the dross removing mode M2 (or while performing of the dross removing process as the above-described fifth step ST5), the controller 7 preferably controls the position of the tool 91 in the rotating state in a fully automated manner. In this case, the operator is no longer restricted to the dross removing operation. For example, an unmanned dross removing operation is enabled. The time necessary for the dross removing mode (in other words, the time from when removal of the dross from the support 2 starts to when the removal of the dross from the support 2 ends) is, for example, equal to or longer than 30 minutes, equal to or longer than 45 minutes, or equal to or longer than 60 minutes. The dross removal operation that consumes time is automated, and therefore the burden on the operator is reduced.

### (Second Machining Mode M3)

The controller 7 may be capable of performing the second machining mode M3 of machining the plate material W with the second tool 92, which is held by the second head 41. The controller 7 controls the rotation drive 44 and the mover 5, and thus performs the second machining mode M3. The second machining mode M3, as illustrated in FIG. 25, is a mode of moving the second head 41, which supports the second tool 92, while rotating the second tool 92 to machine the plate material W, which is supported by the support (for example, to drill the plate material W, which is supported by the support 2).

For example, in an example illustrated in FIG. 37, the controller 7, which executes the program 722 (more specifically, the third program 722c), transmits the rotation command R1 to the rotation drive 44. The controller 7, which also executes the program 722 (more specifically, the third program 722c), transmits the movement command S to the mover 5, based on the third path data 726c, which is stored in the memory 72. The rotation drive 44, which receives the rotation command R1, rotates the second tool 92 about the rotation axis AX. The mover 5, which also receives the movement command S, moves the second tool 92 along the third movement path. For example, the first drive 51b, which receives the movement command S, moves the second tool 92 in a direction perpendicular to the plate material W. In this manner, the second tool 92 in the rotating state is brought into contact with the plate material W to machine the plate material W, which is placed on the support 2 (more specifically, the plurality of plate components 21). The second tool 92 may be a drill or a threading tool (for example, a tap tool).

### (Tool Exchanging Mode M4)

The controller 7 may be capable of performing the tool exchanging mode M4 of exchanging the tool supported by the second head 41 with another tool. The controller 7 controls the mover 5 and the automatic tool changer 8, and thus performs the tool exchanging mode M4.

In the example illustrated in FIG. 33 or FIG. 34, the tool exchanging mode M4 may include exchanging the second tool 92 or the dummy tool 93, which is held by the second head 41, with the tool 91 for removing the dross.

For example, the controller 7, which executes the program 722 (more specifically, the fourth program 722d), transmits the movement command S to the mover 5. The controller 7, which also executes the program 722 (more specifically, the fourth program 722d), transmits a tool change command C1 to the automatic tool changer 8. The mover 5, which receives the movement command S, moves the second head 41 to a tool change position P3. The automatic tool changer 8, which receives the tool change command C1, changes the second tool 92 or the dummy tool 93, which is held by the second head 41, to the tool 91 for removing the dross.

### (Plate Material Transferring Mode M5)

The controller 7 may be capable of performing the plate material transferring mode M5 of transferring the plate material W. The controller 7 controls the plate material transfer apparatus 6 (see FIGs. 3 and 9), and thus performs the plate material transferring mode M5.

For example, the controller 7, which executes the program 722 (more specifically, the fifth program 722e), transmits a first transfer command to the plate material transfer apparatus 6. The plate material transfer apparatus 6, which receives the first transfer command, places the plate material W on the support 2 (see an arrow F1 in FIG. 3).

The controller 7, which also executes the program 722 (more specifically, the fifth program 722e), transmits a second transfer command to the plate material transfer apparatus 6. The plate material transfer apparatus 6, which receives the second transfer command, detaches the machined plate material Wb from the support 2 (see an arrow F2 in FIG. 9).

### (Laser Beam Machining Method)

The above-described placing process (second step ST2) may include transmitting, by the controller 7, the first transfer command to the plate material transfer apparatus 6, and placing the plate material W on the support 2, by the plate material transfer apparatus 6, which receives the first transfer command.

As illustrated in FIG. 26, the above-described plate material machining process (third step ST3) may include: transmitting, by the controller 7, the emission command E1 to the laser irradiation device 3; emitting the laser beam from the laser emission port, by the laser beam irradiation apparatus 3, which receives the emission command E1; transmitting, by the controller 7, the movement command S to the mover 5; and moving the first head 31 along the first movement path, by the mover 5, which receives the movement command S.

As illustrated in FIG. 37, the above-described plate material machining process (third step ST3) may include: transmitting, by the controller 7, the rotation command R1 to the rotation drive 44; rotating the second tool 92 about the rotation axis AX, by the rotation drive 44, which receives the rotation command R1; transmitting, by the controller 7, the movement command S to the mover 5; and moving the second tool 92 along the third movement path, by the mover 5, which receives the movement command S.

The above-described detaching process (fourth step ST4) may include: transmitting, by the controller 7, the second transfer command to the plate material transfer apparatus 6; and removing the machined plate material Wb from the support 2, by the plate material transfer apparatus 6, which receives the second transfer command.

The laser beam machining method may include a process of exchanging the tool held by the second head 41 with another tool (in other words, the tool exchanging process). The tool exchanging process may be performed between the detaching process (fourth step ST4) and the dross removing process (fifth step ST5).

In the example illustrated in FIG. 33, the tool exchanging process includes exchanging the second tool 92, which is held by the second head 41, with the tool 91. In the example illustrated in FIG. 34, the tool exchanging process includes exchanging the dummy tool 93, which is held by the second head 41, with the tool 91.

The above-described tool exchanging process may include: transmitting, by the controller 7, the movement command S to the mover 5; moving the second head 41 to the tool change position P3, by the mover 5, which receives the movement command S; transmitting, by the controller 7, the tool change command C1 to the automatic tool changer 8; and exchanging the second tool 92 or the dummy tool 93, which is held by the second head 41, with the tool 91, by the automatic tool changer 8, which receives the tool change command C1.

As illustrated in FIG. 29, the above-described dross removing process (fifth step ST5) may include: transmitting, by the controller 7, the rotation command R1 to the rotation drive 44; rotating the tool 91 about the rotation axis AX, by the rotation drive 44, which receives the rotation command R1; transmitting, by the controller 7, the movement command S to the mover 5; and moving the tool 91 along the second movement path, by the mover 5, which receives the movement command S.

### (Program 722)

The program 722 (more specifically, the program 722 including the first program 722a, the second program 722b, the third program 722c, the fourth program 722d, and the fifth program 722e) in an embodiment is a program for causing the laser beam machining apparatus 1 (more specifically, the controller 7 of the laser beam machining apparatus 1) to perform at least the plate material machining process (third step ST3) and the dross removing process (fifth step ST5) in the above-described laser beam machining method.

More specifically, the program 722 in an embodiment is a program for causing the laser beam machining apparatus 1 (more specifically, the controller 7 of the laser beam machining apparatus 1) to perform the laser beam machining method including: (1) a process of machining the plate material W by irradiating the plate material W, which is placed on the support 2, with a laser beam (third step ST3); and (2) a process of removing the dross D from the support 2 by bringing the tool 91 in the rotating state into contact with the dross D, which adheres to the support 2 resulting from irradiating the plate material W with the laser beam (fifth step ST5).

The program 722 in an embodiment may be a program for causing the laser beam machining apparatus 1 (more specifically, the controller 7 of the laser beam machining apparatus 1) to perform the laser beam machining method including: (1) a process of placing the plate material W on the support 2 (second step ST2); (2) a process of machining the plate material W by irradiating the plate material W, which is placed on the support 2, with a laser beam (third step ST3); (3) a process of detaching the machined plate material Wb from the support 2 (fourth step ST4); and (4) a process of removing the dross D from the support 2 by bringing the tool 91 in the rotating state into contact with the dross D, which adheres to the support 2 resulting from irradiating the plate material W with the laser beam (fifth step ST5).

In addition, the program 722 in an embodiment may be a program for causing the laser beam machining apparatus 1 (more specifically, the controller 7 of the laser beam machining apparatus 1) to perform the laser beam machining method including: (1) a process of placing the plate material W on the support 2 (placing process); (2) a process of machining the plate material W by irradiating the plate material W, which is placed on the support 2, with a laser beam (plate material machining process); (3) a process of machining the plate material W, which is placed in the support 2, by the second tool 92, which is held by the second head 41 (plate material machining process); (4) a process of detaching the machined plate material Wb from the support 2 (detaching process); (5) a process of detaching the second tool 92 from the second head 41 (tool exchanging process); (6) a process of attaching the tool 91 to the second head 41 (tool exchanging process); and (7) removing the dross D from the support 2 by bringing the tool 91 in the rotating state held by the second head 41 into contact with the dross D, which adheres to the support 2 resulting from irradiating the plate material W with the laser beam (dross removing process).

The respective details of the placing process (second step ST2), the plate material machining process (third step ST3), the detaching process (fourth step ST4), the tool exchanging process, and the dross removing process (fifth step ST5) have been described in the first embodiment, and thus the description of the details of these steps will be omitted.

The memory 72 in an embodiment may be a nonvolatile memory that stores the above-described program 722 (more specifically, the program 722 including the first program 722a, the second program 722b, the third program 722c, the fourth program 722d, and the fifth program 722e). As illustrated in FIG. 38, a nonvolatile storage medium that stores the above-described program 722 may be a portable storage medium 72M.

The present invention is not limited to the above-described embodiments or modifications, and it is apparent that each embodiment or each modification can be appropriately modified or changed within the scope of the technical idea of the present invention. In addition, various techniques used in each embodiment or each modification are applicable to another embodiment or another modification as long as a technical contradiction does not occur. Furthermore, any additional configuration in each embodiment or each modification can be omitted as appropriate.

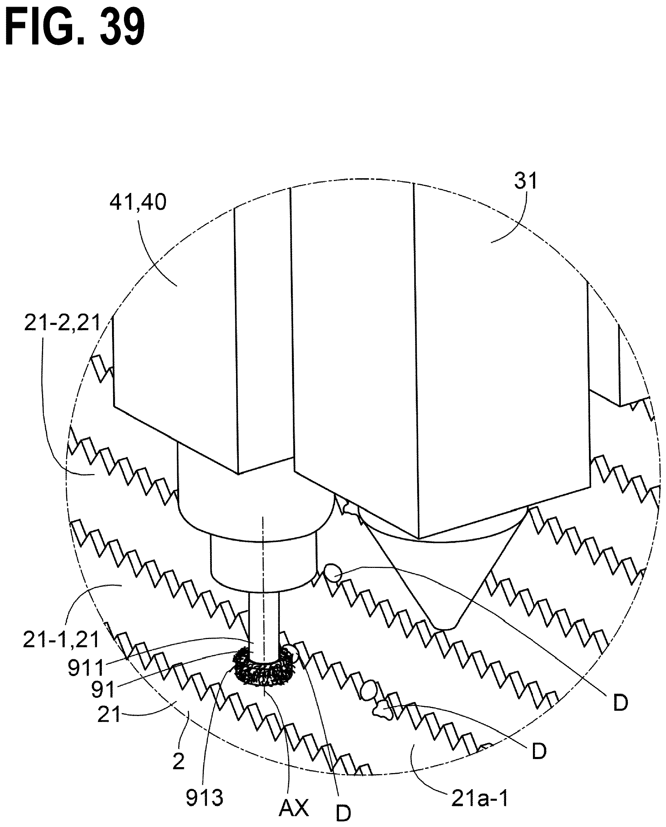

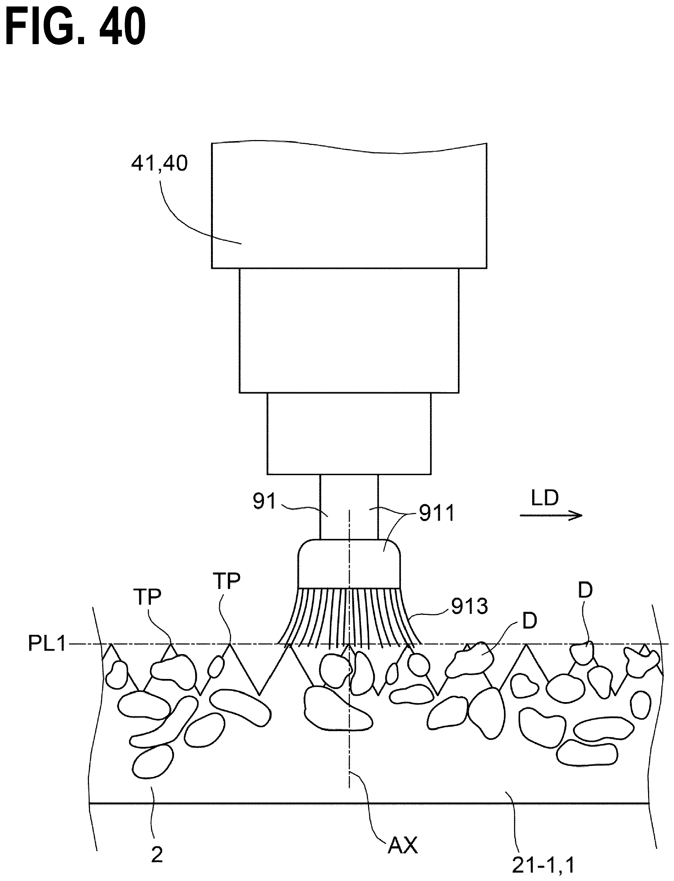

For example, in the above-described embodiment, the tool 91, which is attached to the head 40 (more specifically, the second head 41), is the cutting tool 91m, and the cutting tool 91m includes a cutting edge 910m (see FIGs. 18 and 23, as needed) to be brought into contact with the dross D. Alternatively, as illustrated in FIGs. 39 and 40, the tool 91, which is attached to the head 40 (more specifically, the second head 41), may include a shaft portion 911 and at least one wire rod 913, which is attached to the shaft portion 911. The wire rod 913 is made of, for example, metal.

In the examples illustrated in FIGs. 39 and 40, the shaft portion 911 and at least one wire rod 913 are rotated about the rotation axis AX. In addition, while the tool 91 is rotating about the rotation axis AX (more specifically, while the shaft portion 911 and at least one wire rod 913 are rotating about the rotation axis AX), at least one wire rod 913 comes contact with the dross D, and thus the dross D is removed from the support 2 (more specifically, the plate component 21).

As illustrated in FIG. 39, in the dross removing process (fifth step ST5), the tool 91 in the rotating state about the rotation axis AX moves along the longitudinal direction of the first side surface 21a-1 of the first plate component 21-1, and thus the plurality of pieces of dross D, which adhere to the first side surface 21a-1, may be removed from the first side surface 21a-1 using the at least one wire rod 913.

Alternatively or additionally, as illustrated in FIG. 40, in the dross removing process (fifth step ST5), the tool 91 in the rotating state about the rotation axis AX moves along the first plane PL1, on which the plurality of top portions TP of the support 2 are located, and thus the plurality of pieces of dross D, which adhere to the plurality of top portions TP, may be removed from the plurality of top portions TP using the at least one wire rod 913.

In the examples illustrated in FIGs. 18, 23, 39, and 40, the tool 91 is a dross removing tool that rotates about the rotation axis AX. In this case, the description of the "tool 91" herein may be read as the "dross removing tool".

In the examples illustrated in FIGs. 39 and 40, a plurality of wire rods 913 each having a hair-like shape are attached to the shaft portion 911. Alternatively or additionally, the wire rod 913 may include a coiled wire attached to the shaft portion 911. In the examples illustrated in FIGs. 39 and 40, the base end portion of the wire rod 913 is attached to the shaft portion 911. Alternatively or additionally, the wire rod 913 may be wound around the shaft portion 911.

### Description of Reference Numerals

1 ... Laser beam machining apparatus, 1A ... Multitasking machine, 2 ... Support, 3 ... Laser beam irradiation apparatus, 5 ... Mover, 6 ... Plate material transfer apparatus, 7 ... Controller, 8 ... Automatic tool changer, 15 ... Transfer apparatus, 21-21E, 21F ... Plate component, 21-1 ... First plate component, 21-2 ... Second plate component, 21-3 ... Third plate component, 21-4 ... Fourth plate component, 21a-1 ... First side surface, 21a-2 ... Side surface, 21b-1 ... Second side surface, 21c ... First end portion, 21d ... Second end portion, 23 ... Frame body, 25 ... Bottom plate, 31 ... First head, 31a ... Head main body, 31b ... Attachment, 33 ... Laser light source, 35 ... Optical component, 40 ... Head, 41 ... Second head, 42 ... Rotation body, 43 ... Frame, 44 ... Rotation drive, 44m ... Motor, 50 ... Base, 51 ... First mover, 51a ... First moving body, 51b ... First drive, 53 ... Second mover, 53a ... Second moving body, 53b ... Second drive, 55 ... Third mover, 55a ... Third moving body, 55b ... Third drive, 57 ... Fourth mover, 57a ... Fourth moving body, 57b ... Fourth drive, 58a ... Fifth moving body, 58b ... Fifth drive, 60 ... Robot hand, 61 ... Sucker, 70 ... Hardware processor, 72 ... Memory, 72M ... Storage medium, 74 ... Communication circuit, 76 ... Input device, 78 ... Bus, 81 ... Tool change arm, 91 ... Tool, 91m ... Cutting tool, 92 ... Second tool, 93 ... Dummy tool, 722 ... Program, 722a ... First program, 722b ... Second program, 722c ... Third program, 722c ... Fourth program, 722e ... Fifth program, 726a ... First path data, 726b ... Second path data, 726c ... Third path data, 762 ... Display equipped with touch panel, 910m ... Cutting edge, 911 ... Shaft portion, 913 ... Wire rod, AR1 ... Region to be not irradiated with laser beam, AR2 ... Region to be irradiated with laser beam, AX ... Rotation axis, AX1 ... First axis, AX2 ... Second axis, B ... Laser beam, BP ... Bottom portion, C1 ... Tool change command, D ... Dross, E1 ... Emission command, EG ... Edge portion, OP ... Laser emission port, PT ... Pallet, R1 ... Rotation command, RG1 ... Machining region, RG2 ... Detachment region, S ... Movement command, TP ... Top portion, Te ... Tip end, W ... Plate material, W1 ... Part, W2 ... Offcuts, Wa ... Plate material before machining, Wb ... Machined plate material, Wh ... Through hole

## Claims

1. A laser beam machining method comprising steps of:
placing a plate material on a support;
machining the plate material by irradiating the plate material placed on the support with a laser beam;
detaching the plate material that has been machined from the support; and
removing dross from the support by bringing a tool in a rotating state into contact with the dross that adheres to the support resulting from irradiating the plate material with the laser beam.

2. The laser beam machining method according to claim 1,
wherein the step of machining the plate material includes irradiating the plate material with the laser beam from a first head of a multitasking machine, and
wherein the step of removing the dross from the support includes bringing the tool in the rotating state into contact with the dross that adheres to the support, while the tool attached to a second head of the multitasking machine is rotating about a rotation axis.

3. The laser beam machining method according to claim 1 or 2,
wherein the plate material is machined with the laser beam and the dross is removed from the support in an identical region in a plan view.

4. The laser beam machining method according to one of claims 1 to 3,
wherein the support includes a plurality of plate components, each of which is disposed in upright attitude relative to a horizontal plane, and
wherein the step of removing the dross from the support includes bringing the tool in the rotating state into contact with the dross that adheres to at least one of the plurality of plate components.

5. The laser beam machining method according to one of claims 1 to 4,
wherein the support includes a first plate component, and
wherein the step of removing the dross from the support includes moving the tool in the rotating state along a longitudinal direction of the first plate component to bring the tool in the rotating state into contact with the dross that adheres to the first plate component.

6. The laser beam machining method according to one of claims 1 to 4,
wherein the support includes a first plate component and a second plate component, and
wherein the step of removing the dross from the support includes moving the tool in the rotating state along a first path located between the first plate component and the second plate component to bring the tool in the rotating state into contact with the dross that adheres to the first plate component.

7. The laser beam machining method according to claim 6,
wherein the step of removing the dross from the support includes moving the tool in the rotating state along a second path located between the first plate component and the second plate component to bring the tool in the rotating state into contact with the dross that adheres to the second plate component,
wherein the first path is closer to the first plate component than the second path, and
wherein the second path is closer to the second plate component than the first path.

8. The laser beam machining method according to one of claims 1 to 5,
wherein the support includes a plurality of top portions that support the plate material, and
wherein the step of removing the dross from the support includes moving the tool in the rotating state along a first plane on which the plurality of top portions are located to bring the tool in the rotating state into contact with the dross that adheres to at least one of the plurality of top portions.

9. The laser beam machining method according to one of claims 1 to 8, further comprising steps of:
attaching a second tool to a head;
machining the plate material using the second tool attached to the head by bringing the second tool in the rotating state into contact with the plate component placed on the support;
detaching the second tool from the head; and
attaching the tool for removing the dross to the head,
wherein the step of removing the dross from the support includes bringing the tool for removing the dross and in the rotating state into contact with the dross that adheres to the support.

10. The laser beam machining method according to one of claims 1 to 9,
wherein the tool includes a shaft portion and at least one wire rod attached to the shaft portion, and
wherein the dross is removed from the support by bringing the at least one wire rod into contact with the dross.

11. A laser beam machining apparatus comprising:
a laser beam irradiation apparatus including a first head configured to irradiate a plate material supported by a support with a laser beam;
a second head configured to support a tool to be rotatable;
a rotation drive configured to rotate the tool;
a mover configured to move the second head relative to the support; and
a controller configured to control the laser beam irradiation apparatus, the rotation drive, and the mover,
wherein the controller is capable of selectively performing
a first machining mode of irradiating the plate material with the laser beam from the first head, and
a dross removing mode of removing dross from the support by bringing the tool in a rotating state into contact with the dross that adheres to the support resulting from irradiating the plate material with the laser beam.

12. The laser beam machining apparatus according to claim 11,
wherein the mover comprises:
a moving body configured to support both the first head and the second head; and
a drive configured to move the moving body.

13. The laser beam machining apparatus according to claim 11 or 12,
wherein the controller is capable of performing a second machining mode of machining the plate material using a second tool held by the second head.

14. The laser beam machining apparatus according to one of claims 11 to 13,
wherein the controller derives a movement path of the tool for the tool to intensively pass through a region to be irradiated with the laser beam in the support, in comparison with a region not to be irradiated with the laser beam in the support, and
wherein the dross removing mode includes moving the tool in the rotating state along the movement path.

15. A program for causing a laser beam machining apparatus to perform a laser beam machining method comprising steps of:
machining a plate material by irradiating the plate material placed on a support with a laser beam; and
removing dross from the support by bringing a tool in a rotating state into contact with the dross that adheres to the support resulting from irradiating the plate material with the laser beam.
